# EUROPEAN PATENT SPECIFICATION

(11) **EP 4 140 281 B1**
(45) Date of publication and mention of the grant of the patent: **14.05.2025**
(21) Application number: 22192631.4
(22) Date of filing: 29.08.2022
(51) Int. Cl.: A01D 34/00, A01D 34/64, A01D 34/71, A01D 34/84

(54) **MOBILE DEVICE WITH AN ARTICULATION SYSTEM EFFECTIVE BETWEEN AN OPERATING BODY AND A SUPPORT FRAME AND WITH AN OBSTACLE DETECTOR FUNCTIONALLY CONNECTED TO AN ACTUATOR OF THE ARTICULATION SYSTEM**
MOBILES GERÄT MIT EINEM GELENKSYSTEM, DAS ZWISCHEN EINEM ANTRIEBSGEHÄUSE UND EINEM STÜTZRAHMEN ANGEORDNET IST, UND MIT EINEM BETÄTIGUNGSSYSTEM, DAS FUNKTIONELL MIT DEM GELENKSYSTEM VERBUNDEN IST
DISPOSITIF MOBILE AVEC UN SYSTÈME D'ARTICULATION AGENCÉ ENTRE UN CORPS D'OPERATION ET UN CHÂSSIS DE SUPPORT ET AVEC UN SYSTÈME D'ACTIONNEMENT RELIÉ FONCTIONNELLEMENT AU SYSTÈME D'ARTICULATION

(30) Priority: 31.08.2021 IT 202100022616
(43) Date of publication of application: 01.03.2023
(73) Proprietor: Stiga S.p.A. in breve anche St. S.p.A., 31033 Castelfranco Veneto (TV) (IT)
(72) Inventor: FIOR, Roberto, 31033 Castelfranco Veneto (TV) (IT); CAMERON, James, 31100 Treviso (IT)
(74) Representative: PGA S.p.A.

(56) References cited:
- EP-A1- 3 738 424
- WO-A1-2020/253794
- CN-A- 106 561 148
- DE-A1- 102004 057 043
- DE-U1- 8 709 285
- US-A- 5 771 672

## Description

### FIELD OF THE INVENTION

The present invention relates to a self-driving mobile device for land maintenance, for example gardens, turfgrasses or agricultural land. In particular, the mobile device can be a lawnmower having a work tool, for example the cutting blade.

The present invention further relates to a land maintenance method by means of said mobile device.

### BACKGROUND ART

The use of mobile devices, such as lawnmowers, soil tillers, soil aerators or the like, manually driven or self-driving, configured to perform their functions to fully cover the work area are known in the gardening field, and generally in the field related to land maintenance.

During the work steps, some portions of the work area, for example the peripheral zones, border zones or some particular zones centrally located in the work area, can be particularly difficult to effectively reach, due to the presence of obstacles, for example hedges, flower beds, trees, or the like. Due to the presence of such obstacles, the mobile device can have difficulty reaching certain zones of the work area, resulting in lower work quality with respect to zones of the work area which are easier to access.

In the specific case in which the mobile device is moved manually, the operator can encounter difficulties in moving the mobile device in the peripheral and border zones due to the presence of the obstacles indicated above.

Moreover, the very dimensions of the mobile device, in height and/or in width, can interfere with the aforementioned obstacles, for example with a peripheral hedge, thus preventing a correct processing of the peripheral or border zones.

Furthermore, the mobile device's drive handle adjustment systems belonging to the prior art, e.g., the height adjustment, tend to wear quickly, especially if used extensively: once the adjustment system is worn, the handle tends to "fall", being in fact unusable for guiding and governing the mobile device.

DE8709285U1 discloses a lawnmower constrained on rails, the frame of which can move transversely in the space between the rails. US5,771,672 describes a lawnmower in which the cutting plate can move laterally to the right and left with respect to the frame. EP3738424A1 describes a lawnmower comprising a mechanism for coupling the cutting plate to the frame which allows a displacement of the cutting plate in a transverse direction. DE102004057043A1 and EP1791415A1 describe a lawnmower comprising two subassemblies mutually rotatable about a vertical axis, the first sub-assembly belonging to the handlebar and the cutting tool, the second sub-assembly belonging to a pair of wheels. EP3466237A1 describes a lawnmower with a handlebar assembly, the handlebar assembly comprising a coupling component and a grasping segment which is rotatable with respect to the coupling component. AU462048B2 describes a lawnmower with a grasping assembly, the grasping assembly comprising a lower portion fixed to the frame and an upper portion rotatable so as to be movable laterally to the advancement direction of the lawnmower. US2011/0302893A1 discloses a lawnmower comprising a handle rotatably connected to the frame and an inclination adjustment device interposed between the handle and the frame. DE4428373C1 describes a lawnmower the handlebar of which can rotate with respect to the frame and can be locked according to different inclinations. EP3498073A1 describes a lawnmower the handlebar of which is connected to the frame by a joint, the joint comprising a handle fastening body, a pair of arms fastened to the frame, and selective locking means of the body with respect to the arms. US2014/0290006A1 discloses a lawnmower with a handlebar height adjustment mechanism, the adjustment mechanism comprising a pair of toothed disc elements and an interconnecting disc element. EP1902608A2 describes a lawnmower with a handlebar assembly comprising a lower structural element and an upper structural element which can be rotated with respect to the lower structural element. Document WO2020/25379A1 discloses an autonomous lawn mower, comprising a housing, a movement module, a cutting mechanism and a control unit. A protecting assembly comprising a movable protecting member is located on the outer side of the cutting mechanism. A detection module configured to detect whether there is an obstacle in front and a size of the obstacle is operably connected to a movability control module of the control unit. When there is a passable obstacle in front, the movability control module controls the movable protecting member and the cutting mechanism to automatically move to avoid the obstacle and adjusts a movement distance between the movable protecting member and the cutting mechanism according to the size of the obstacle. When there is no obstacle in front, the movability control module controls the movable protecting member and the cutting mechanism to restore an original state. When there is an excessively large obstacle in front, the movability control module controls the movable protecting member and the cutting mechanism not to move and controls a stop or a steering of the autonomous lawnmower. Document CN106561148A discloses a mowing machine comprising a cutting mechanism and a body, the body being provided with a side protection located at sides of the cutting mechanism and a with bottom protection located below the cutting mechanism, a grass inlet being defined in the bottom protection. The body is provided with a movable member connected to the cutting mechanism and with a driving mechanism for driving the movable member, and consequently the cutting mechanism, to move. The mowing machine comprises a sensing element for detecting the shape of obstacles in real time and for driving the driving mechanism accordingly, so that the position of the cutting mechanism is adapted to the shape of the obstacles.

### OBJECT OF THE INVENTION

Therefore, the object of the present invention is to solve at least one of the drawbacks and/or limitations of the currently-known mobile devices for land maintenance.

A first objective is to facilitate the land maintenance operations at a peripheral or border zone of the work area.

A further objective is to make the land maintenance operations more effective at a peripheral or border zone of the work area.

A further objective is to allow the mobile device to reach peripheral or border zones of the work area which cannot be reached with the common mobile devices.

A further objective is to facilitate the land maintenance operations for an operator responsible for driving and moving the present mobile device.

A further objective is to improve the land maintenance operations at a peripheral or border zone of the work area when performed by a self-driven mobile device.

A further objective is to avoid a stop of a self-driving mobile device in accordance with the present invention when it is at a peripheral or border zone of the work area.

A further objective is to provide a resistant drive handle capable of withstanding repeated adjustment cycles in height and along the lateral direction.

These and other objects, which will appear more clearly from the following description, are achieved by a self-driving mobile device for land maintenance in accordance with one or more of the appended claims.

### BRIEF DESCRIPTION OF THE DRAWINGS

Some embodiments and aspects of the invention will be described hereinafter with reference to the accompanying drawings, given merely for illustrative, non-limiting purposes in which:
- Figure 1 is a perspective view of a manually-driven mobile non-claimed exemplary device;
- Figures 2 to 5 show different embodiments of a manually-driven mobile non-claimed exemplary device;
- Figures 6 and 7 are perspective views of a drive handle of a manually-driven mobile non-claimed exemplary device;
- Figures 8A, 8B and 9 are front and schematic views of a manually-driven mobile non-claimed exemplary device during an operating condition:
- Figure 10 is a top view of a self-driving mobile device in accordance with the present invention;
- Figure 11 is a top view of a self-driving mobile device in accordance with the present invention;
- Figures 12 and 13 are views from the top and from the perspective of a drive handle of a mobile non-claimed exemplary device respectively;
- Figures 14A and 14B are top and perspective views, respectively, of a laterally displaced drive handle of a mobile non-claimed exemplary device;
- Figure 15 is a side view of a drive handle in a raised and lowered position;
- Figure 16 is an exploded view of a drive handle of a mobile non-claimed exemplary device;
- Figure 17 is a view from above of a drive handle of the mobile non-claimed exemplary device;
- Figure 17A is a sectional view of figure 17 in a closed condition of the joint closing system;
- Figure 17B is a sectional view of figure 17 in an opening condition of the joint closing system;
- Figures 18 and 19 show the drive handle in accordance with a non-claimed example in a folded position;
- Figure 20 is a perspective view of a regulating insert of a joint of the drive handle in accordance with a non-claimed example;
- Figure 20A is a sectional view of the regulating insert shown in figure 20;
- Figure 21 shows a further embodiment of the drive handle in accordance with a non-claimed example;
- Figure 22 is a view from below of a mobile non-claimed exemplary device having a cutting blade;

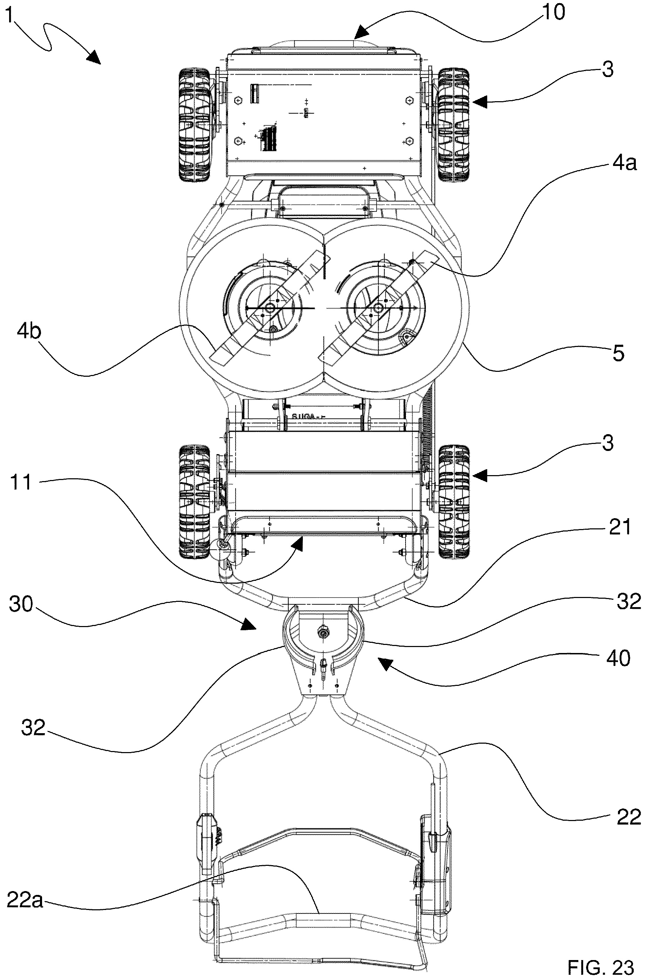

- Figure 23 is a view from below of a mobile non-claimed exemplary device having two cutting blades;
- Figure 24 is an exploded view of an actuation system of a mobile non-claimed exemplary device;
- Figure 25 is a sectional view of figure 24 according to a plane passing through the rotation axis B of the joint.

### DEFINITIONS AND CONVENTIONS

It should be noted that in the present detailed description, corresponding parts illustrated in the various figures are indicated with the same numerical references. The figures could illustrate the object of the invention through non-scale depictions; therefore, the parts and components illustrated in the figures related to the object of the invention could exclusively relate to schematic depictions.

### Control unit

The control unit can be a single unit or be formed by a plurality of different control units depending on the design choices and operational needs.

The term control unit means an electronic type component which can comprise at least one of: a digital CPU, an analogue type circuit, or a combination of one or more digital processors with one or more analogue type circuits. The control unit can be "configured" or "programmed" to carry out certain steps: in practice, this can be accomplished by any means which allow the control unit to be configured or programmed. For example, in the case of a control unit comprising one or more CPUs and one or more memories, one or more programs can be stored in appropriate memory banks connected to the CPU(s); the program(s) contains instructions which, when executed by the CPU(s), program or configure the control unit to carry out the operations described in relation to the control unit. Alternatively, if the control unit is or comprises analogue circuitry, then the circuitry of the control unit can be designed to include circuitry configured, in use, to process electrical signals so as to carry out the steps related to the control unit.

### Actuator

The term actuator means any device capable of causing a movement on a body, for example upon a command of the control unit, a command sent by the control unit received by the actuator. The actuator can be electrical, pneumatic, mechanical such as spring, hydraulic, or other type.

### Obstacle

The term obstacle refers to any body or element capable of limiting, reducing or obstructing the path of the mobile device within the work area. The obstacle can be a hedge, a flowerbed, the peripheral border of the work area, an inner border of the work area, a boulder, a tree, a plant or the like. This obstacle can further comprise a safety limit, for example if the obstacle is defined by a ditch, a gully or a step. In other words, the obstacle can actively hinder the path of the mobile device, or define a limit not to be exceeded for safety reasons.

### DETAILED DESCRIPTION

### Mobile device

The present disclosure relates to a mobile device 1 configured to move and carry out maintenance operations within a work area of land, such as turfgrass, a garden or agricultural land, having an extension between 10 and 10000 square meters, in particular between 500 and 3000 square meters: the maintenance operations can comprise, for example, cutting turfgrass. In particular, the mobile device 1 can be, for example, a lawnmower as shown in the accompanying drawings.

Alternatively, the mobile device 1 can be a motor hoe, a tiller, an aerator or the like.

The mobile device 1 is a self-driving device.

It is pointed out that, since the invention as claimed in appended claims applies to self-driving mobile devices, disclosed embodiments which relate only to manually-driven mobile devices should be regarded as examples not being part of the invention as claimed in the appended claims.

If it is manually driven, the mobile device 1 is driven by a user: in this case the mobile device 1 can comprise driving movement means 3, for example one or more traction wheels, adapted to determine the advancement of the mobile device 1: alternatively the mobile device 1 can be configured to be pushed by a user. If the mobile device 1 is manually driven and comprises driving movement means 3, the mobile device 1 can be a tractor comprising a driving station to accommodate the user on board, the latter being adapted to drive the tractor within the work area. Alternatively, if the mobile device 1 is manually driven and does not comprise driving movement means 3, for example idle wheels, the mobile device 1 comprises a drive handle to allow the operator to move and guide the mobile device within the work area: in such a case, the mobile device has dimensions and mass consistent with the need, on the part of the user, to have to move it by pushing within the work area. In a further embodiment, the manually-driven mobile device 1 comprises driving movement means 3 adapted to determine, or contribute to, the movement of the mobile device, and a drive handle configured to be grasped by a user to allow the driving thereof within the work area.

The movement means 3 can comprise one or more electric motors operatively connected to a control unit 50 and to at least one drive wheel of the mobile device 1 to determine the advancement movement thereof. The electric motor of the movement means 3 preferably has a nominal power between 1000 W and 2000 W, in particular between 1300 W and 1500 W if it is a pushed lawnmower or between 1500 W and 2000 W if it is a tractor with driving station for an operator. Alternatively, the mobile device 1 can comprise a combustion engine, for example an Otto or Diesel cycle engine, operatively connected to the movement means 3 to determine the movement of the mobile device 1

The manually-driven mobile device 1, comprising the drive handle and not comprising an on-board driving station, preferably has a length between 40 cm and 70 cm, and a width between 30 cm and 60 cm. Alternatively, a manually-driven mobile device 1, in particular the tractor comprising an on-board driving station, preferably has a width between 65 cm and 125 cm

In accordance with the invention, the mobile device 1 is self-driving, the mobile device 1 comprises the movement means 3 described above and is further configured to move and drive autonomously within the work area 1 by using one or more sensors, so as to orient itself and to avoid obstacles, as per the prior art. For example, the self-driving mobile device 1 can comprise one or more proximity sensors and/or one or more position sensors configured to send signals to a control unit 50 configured to command the driving movement means 3 to guide the mobile device 1 within the work area to carry out the maintenance activities.

The self-driving mobile device 1 preferably has a width between 30 cm and 125 cm.

The on-board battery of the mobile device 1 can be a rechargeable battery having a charging capacity between 2.5 Wh and 40 Wh. The battery can be configured to deliver a voltage preferably between 26 Volts for self-driving robots and 48 Volts for tractors. In more detail, the battery can be configured to deliver a current, during a standard operating condition, between 2 Amps and 5 Amps for self-driving robots, and between 5 Amps and 60 Amps for tractors. The battery can be a rechargeable battery via a power outlet of a home network, for example a 110V, 200V or 380V power source.

The mobile device 1 carries a control unit 50 on board, in particular a first controller, configured to carry out one or more commands in accordance with the present invention. It should be noted that in the present description, when referring to a *"control unit 50",* the latter can be arranged on board the mobile device 1, or can be carried by a remote device, such as, for example, a PC, a server, a tablet or a smartphone, distinct and separate from the mobile device 1.

The mobile device 1 of the present invention, comprises at least one work tool 4, for example one or two rotary blades, configured to carry out the maintenance operations in the work area: an electric motor 80 or combustion engine, optionally the same motor as the movement means 3, is configured to activate the work tool 4. A control unit 50 can be connected to the electric motor of the work tool 4 and configured to command the activation thereof. The mobile device 1 provided with the rotary blade can thus be a lawnmower. Similarly, if the mobile device is a lawnmower, the operating body is a cutting plate defining a protection volume carrying the cutting blade. In particular, the cutting plate has a bell-like shape in which the internal volume faces the ground in an operating condition.

In an embodiment, the mobile device 1 comprises a single electric motor 80 or combustion engine, operatively connected to the work tool 4 and to the movement means 3 so as to make such movement means 3 driving. Alternatively, the mobile device 1 can comprise an electric motor or combustion engine, connected to the work tool 4, and a further electric motor or combustion engine, operatively connected to the driving movement means 3.

In a further embodiment, the mobile device 1 is an electrically powered device, in which the movement means 3 and the work tool 4 are driven by one or more electric motors powered by an on-board battery.

The work tool 4 preferably comprises a cutting blade for cutting turfgrass, rotating about an axis A: alternatively, the work tool 4 can comprise an aerator configured to perform a plurality of holes in the ground, or a tiller or a motor hoe.

It should thus be noted that the present invention is not related solely to a lawnmower, but can be used in association with other devices in the field of gardening and land maintenance, such as aerators and motor hoes.

The mobile device 1 of the present invention comprises a support frame 2 carrying the movement means 3, whether driven or idle, one or more work tools configured to perform the maintenance operations within the work area and an operating body 5 carrying and/or hosting the work tool 4 and defining an actuation region of the mobile device 1 configured to perform the maintenance operations. In detail, the movement means 3 can comprise wheels, in particular four wheels or tracks. The wheels can be arranged at the respective four vertices of the support frame 2, to define a rectangular or square polygonal shape.

The mobile device 1 comprises a front portion 10, a rear portion 11 opposite to, and distanced from, the front portion 10, a left side 12 interposed as a connection between the front portion 10 and the rear portion 11 of the mobile device 1, and a right side 13 interposed as a connection between the front portion 10 and the rear portion 11 of the mobile device 1: the right side 13 is opposite and distanced from the left side 12.

The words *"right"* and "left" are a convention which can be arbitrarily defined according to a front or rear view of the mobile device 1, as long as such a convention is maintained unchanged during the reading of such a description, of the claims and of the attached aspects.

The left side 12 and the right side 13 can comprise the movement means 3, in particular wheels or movement tracks: for example, the left side 12 and the right side 13 of the mobile device 1 can each comprise two movement wheels placed at the front portion 10 and the other at the rear portion 11. In other words, the mobile device 1 can have a front wheel axle 3a placed at the front portion 10 and comprising a left front wheel 3a' and a right front wheel 3a", and a rear wheel axle 3b placed at the rear portion 11 and comprising a left rear wheel 3b' and a right rear wheel 3b".

An envelope of the four wheels, in particular an envelope defined by the left and right front wheels and the left and right rear wheels, defines a peripheral shape 7 of the mobile device 1.

The mobile device 1 extends in length between the front portion 10 and the rear portion 11, to define a longitudinal axis X of the mobile device 1: in particular, the longitudinal axis X of the mobile device 1 crosses the front portion 10 and the rear portion 11 substantially orthogonally. In more detail, the longitudinal axis X of the mobile device 1 can define an axis of symmetry between the left side 12 and the right side 13 of the mobile device 1 and pass through a central portion of the mobile device 1 itself.

Similarly, a straight advancement of the mobile device 1 can be coincident with the longitudinal axis X of the mobile device 1. Furthermore, the longitudinal axis X can be substantially orthogonal to the front and/or rear wheel axis of the mobile device 1 at least during a straight motion condition. Furthermore, the longitudinal axis X can be equidistant from the left and right wheels of the same axis: in such a case, the longitudinal axis defines a central longitudinal axis of the mobile device. In particular, the longitudinal axis X, in the present description, is considered centrally placed to the mobile device.

The movement means 3 define a support plane SP for the mobile device 1: in fact, such a support plane SP coincides with the ground during an operating condition of the mobile device 1. In greater detail, the support plane is passing through the points of contact between the wheels of the mobile device 1 and the ground on which the mobile device 1 is arranged. It should be noted that the rotary blade of the work tool 4 is movable about a rotation axis A which is transverse or substantially orthogonal to the support plane SP.

The movement means 3 can further define a straight advancement of the mobile device 1 along a longitudinal advancement direction substantially coincident with the longitudinal axis X of the mobile device 1: in particular, the longitudinal advancement direction is substantially orthogonal to a rotation axis of the wheels of the mobile device 1. Such a longitudinal advancement direction is substantially parallel to the support plane SP: likewise the longitudinal axis X is parallel to the support plane SP.

The mobile device 1 further extends in height along a vertical axis Z orthogonal to the longitudinal axis X and to the support plane SP defined by the movement means 3. In other words, the longitudinal axis X is orthogonal, when the mobile device 1 is resting on the ground on the movement means 3 thereof, to the ground itself. The operating body 5 can be movable in height along the vertical axis Z between a distal position and a near position with respect to the support plane SP: in particular, during an operating condition, the operating body 5 can be movable in height along the vertical axis Z between a distal position and a near position with respect to the ground, to allow a variable cutting height. A variation along the vertical axis Z of the operating body 5 determines a simultaneous variation in height of the work tool 4, and consequently a variation in the distance between the work tool 4 and the ground and/or support plane.

Similarly, the mobile device 1 extends in width along a transverse axis W between a left side 12, interposed as a connection between the front portion 10 and the rear portion 11 of the mobile device 1, and a right side 13, also interposed as a connection between the front portion 10 and the rear portion 11 of the mobile device 1: the right side 13 is opposite and distanced with respect to said left side 12. In particular, the transverse axis W is orthogonal to the longitudinal axis X and to the vertical axis Z.

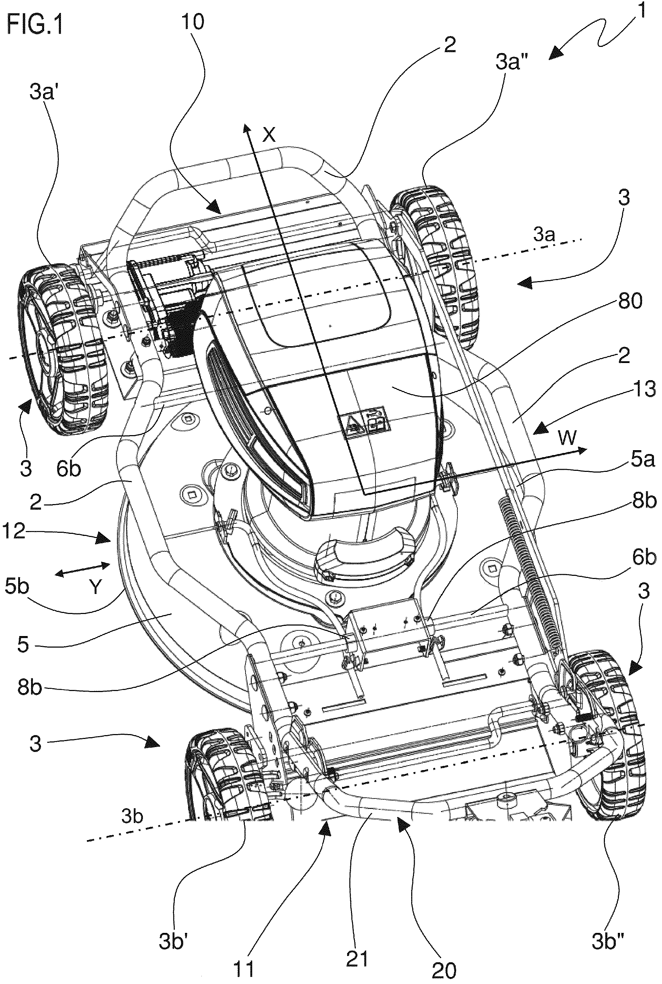

In other words, the longitudinal axis X, the transverse axis W, and the vertical axis Z define a reference system of the mobile device 1, as shown in figure 1. The origin of said reference system can be the mass or geometric centre of gravity of the mobile device.

In accordance with such a reference system, the rotation axis A of the rotary blade is substantially parallel or coincident with the vertical axis Z of the mobile device 1.

An axis of the front and/or rear wheels is parallel to the transverse axis W and optionally substantially parallel to the support plane SP.

The mobile device 1, in the case of a non-claimed manually-driven mobile device 1 as shown in figures 1-5, can comprise a drive handle 20 substantially constrained at the rear portion 11 of the mobile device 1 and configured to allow an operator to drive and optionally move, for example push, the mobile device 1 within the work area. The drive handle 20 can be made of metallic material, for example steel, iron or aluminium, or plastic or composite material. The drive handle 20 preferably extends along an inclined direction transverse to the operating body 5, in particular transverse to the support plane SP. The drive handle 20 defines in particular an angle with the support plane SP between 20° and 70°, more in particular between 30° and 50°. As shown in figures 1 to 5, the handle extends at the rear of the mobile device 1 substantially from the rear portion 11 between a first end, connected at the rear portion 11 of the mobile device 1, and a second end configured to allow gripping by an operator: in particular the drive handle 20, being inclined with respect to the support plane, defines a horizontal projection on the support plane, in other words on the ground, and a vertical projection on the vertical axis of the mobile device 1. The horizontal projection extends from the rear portion 11 of the mobile device 1 along and towards a direction away from the rear portion 11 of the mobile device 1.

The handle can be directly constrained to the operating body 5 of the mobile device 1 or to the support frame 2. In particular, the handle can be constrained at a first and a second hooking point to the mobile device 1, for example at a left hooking point and a right hooking point.

The drive handle 20 defines a tool which the operator uses to push and/or guide the mobile device 1 within the work area.

In addition, the operator can, by means of the handle, lift at least part of the mobile device 1: for example, by lowering the handle and leveraging the rear wheels of the mobile device 1, the operator can lift the front wheels of the mobile device 1 and the operating body 5. Further details of the handle are described in the disclosure below.

The operating body 5 defines a cover of the work tool 4, in particular of the rotary blade: the operating body 5 covers the rotary blade at least laterally and above, while the operating body 5 is open below to allow contact between the grass and the rotary blade. In accordance with an embodiment, the operating body 5 has a circular or semicircular shape: alternatively, the operating body 5 can have a polygonal shape, for example rectangular or square. In particular, the operating body 5 comprises a disc-like upper portion carrying the motor and the relative work tool 4, for example the rotary blade: the operating body 5 further comprises a side wall emerging transversely from the upper portion, in particular from a peripheral zone of the upper portion. The operating body 5 thus has a bell-like shape defining an internal volume housing the work tool 4.

The operating body 5 can be made of metallic material, for example steel or aluminium, or plastic or composite material. It should be noted that the operating body is rigidly constrained to the work tool and to the relative motor: consequently, any movement of the operating plane forcibly determines a similar movement of the work tool and the relative motor. In other words, the operating body and the work tool are integral with each other: the only degree of freedom of the work tool with respect to the operating plane is the rotational one about the rotation axis A.

The mobile device 1 further comprises a discharge conduit 14 configured to convey the cut grass, during an operating condition, towards a rear or side portion of the mobile device 1 in particular, said discharge conduit 14 extends between a first end facing an outlet of the operating body 5, and a second end adapted to discharge the cut grass and optionally to be constrained to a storage box of the cut grass.

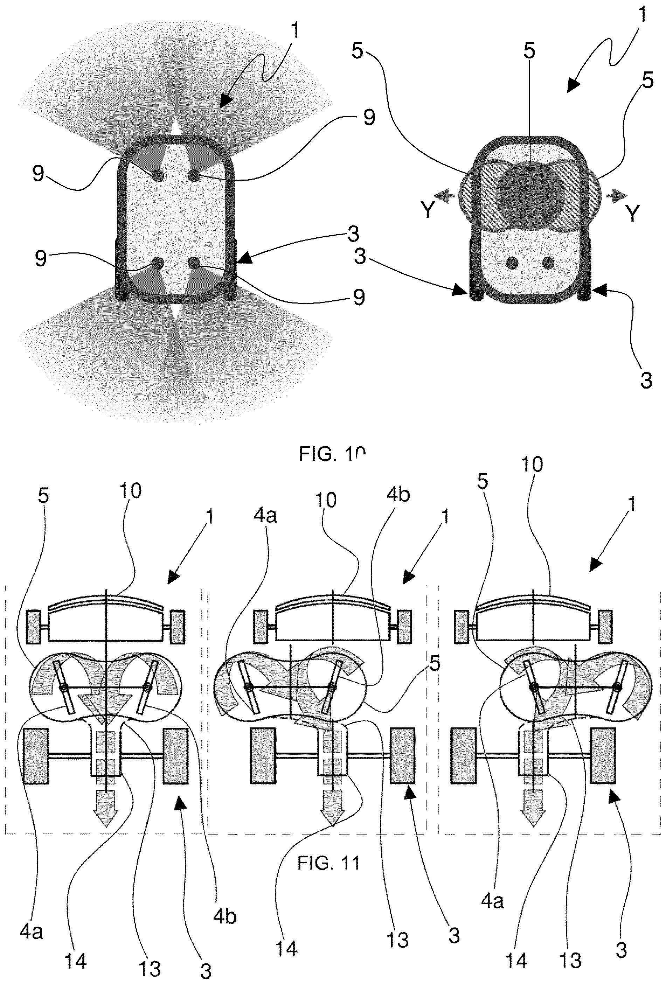

In an embodiment schematically shown in figure 11, the work tool 4 of the mobile device 1 comprises a first rotary blade 4a movable by rotation about a rotation axis A and a second rotary blade 4b movable by rotation about an auxiliary rotation axis A'. The first and the second rotary blade 4b are both carried by the same operating body 5 and arranged side by side: in particular the rotation axis A is substantially parallel and distanced with respect to the auxiliary rotation axis A'. It should be noted that the rotation axis A and the auxiliary rotation axis A' can be substantially orthogonal to the support plane defined by the movement means 3.

The first and the second blade can have the same diameter, or alternatively, can have different diameters, for example in which the first rotary blade 4a has a smaller diameter with respect to the second rotary blade 4b.

The first and the second blade are preferably counter-rotating, so as to direct the cut grass towards the discharge conduit: the term counter-rotating indicates that if the first blade rotates clockwise, the second blade rotates counter-clockwise and vice versa.

In accordance with the embodiment comprising two rotary blades, the operating body 5 can have an elongated shape to entirely cover the two rotary blades: in particular the operating body 5 can have an elongated and circular shape at the lateral ends thereof as in figure 11.

In accordance with the embodiment comprising two rotary blades, the mobile device 1 further comprises a flexible conduit 13 extending between a first end constrained to a central portion of the operating body 5, and a second end constrained to an inlet of the discharge conduit. The flexible conduit is thus interposed between the discharge conduit 14 and the operating body 5 and is configured to allow the passage of the cut grass towards the discharge conduit both when the operating body 5 is arranged in the left lateral position and when it is arranged in the right lateral position. The flexible conduit can be bellows-shaped and made of fabric material, alternatively of plastic material.

### LATERALLY MOVABLE DRIVE HANDLE

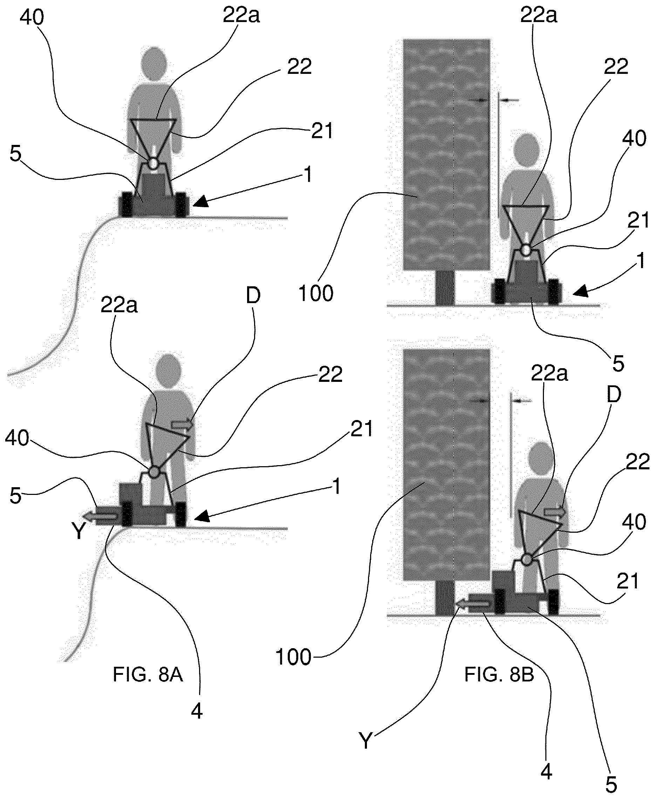

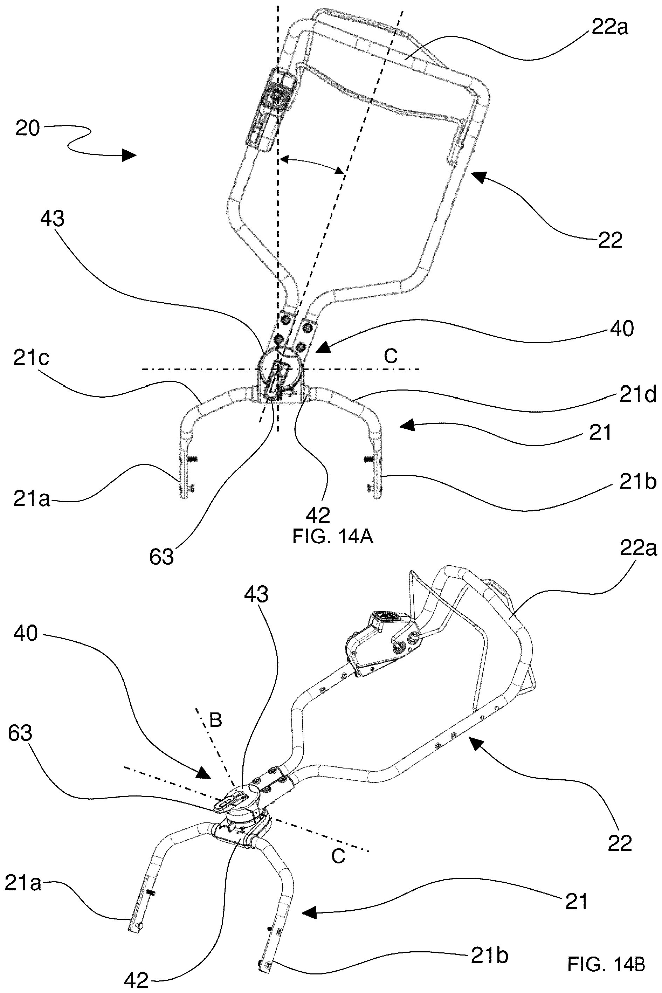

The manually-driven mobile device 1 comprises the drive handle 20 emerging at the rear of the mobile device 1 and a coupling member, connected to the drive handle 20, configured to allow the movement of at least part of the drive handle 20 along a control axis D, as shown in figures 8A and 8B, and figures 14A and 14B in accordance with a further non-claimed example.

It should be noted that the control axis D comprises at least one translational component substantially parallel with the transverse axis W: this means that the movement of the drive handle 20 can occur further along a vertical axis, or occur by rotation, while still comprising a movement component parallel with the transverse axis W.

The lateral movement of the drive handle allows an operator to avoid any obstacles along the path in the work area. For example, if the mobile device 1 were to operate near a hedge, the operator can laterally move the drive handle 20 away from the hedge and simultaneously keep the mobile device 1 against the hedge itself. In other words, such an non-claimed example allows to move the driving position of the operator to easily reach zones of the work area which are difficult to access, without at the same time compromising the ability to control driving the mobile device 1.

In particular, the coupling member is configured to allow the positioning, along the control axis D, of the drive handle 20 in:
- a right lateral position, in which the drive handle 20 emerges at least in part laterally to the right with respect to the peripheral shape 7,
- a left lateral position, in which the drive handle 20 emerges at least in part laterally to the left with respect to the peripheral shape 7,
- a central position interposed between the right lateral position and the left lateral position.

The right lateral position and the left lateral position of the drive handle 20 define the maximum movement end limits of the drive handle 20 along the control axis D. In particular, the drive handle 20, when arranged in the left lateral position and/or in the right lateral position, exceeds the lateral dimension limits defined by the movement means 3 of the mobile device 1. The maximum translation value of the drive handle along the control axis D useful for the movement of the operating body 5 is between 5 cm and 50 cm with respect to the central position.

In an non-claimed example not shown in the accompanying drawings, the coupling member comprises a rail configured to move the drive handle for translation along the control axis 40: in particular said translation being a movement of the handle along a straight trajectory and substantially orthogonal to the longitudinal axis X of the mobile device and optionally parallel to the translation axis Y of the operating body 5.

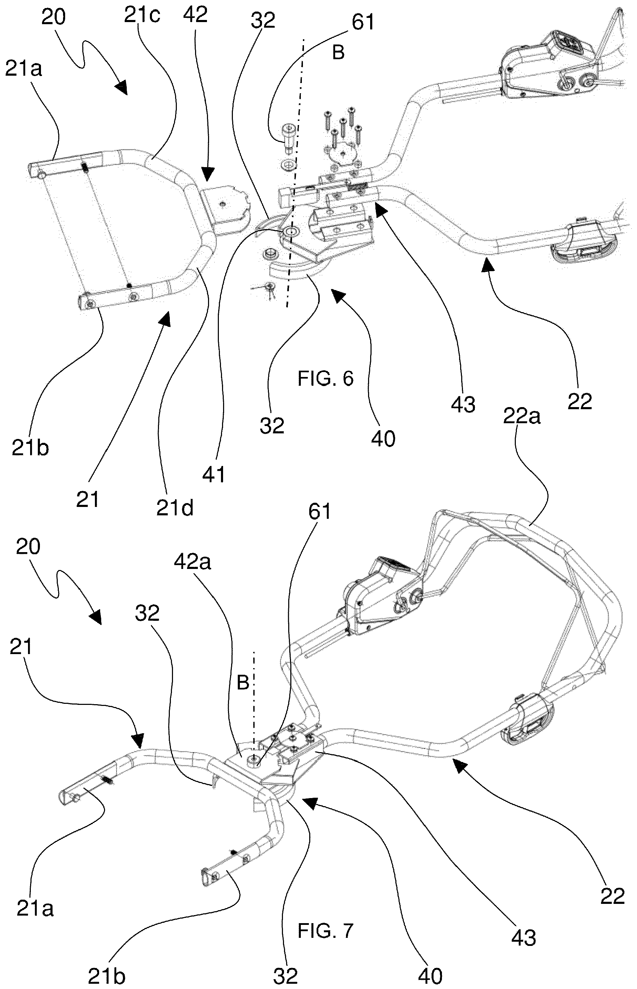

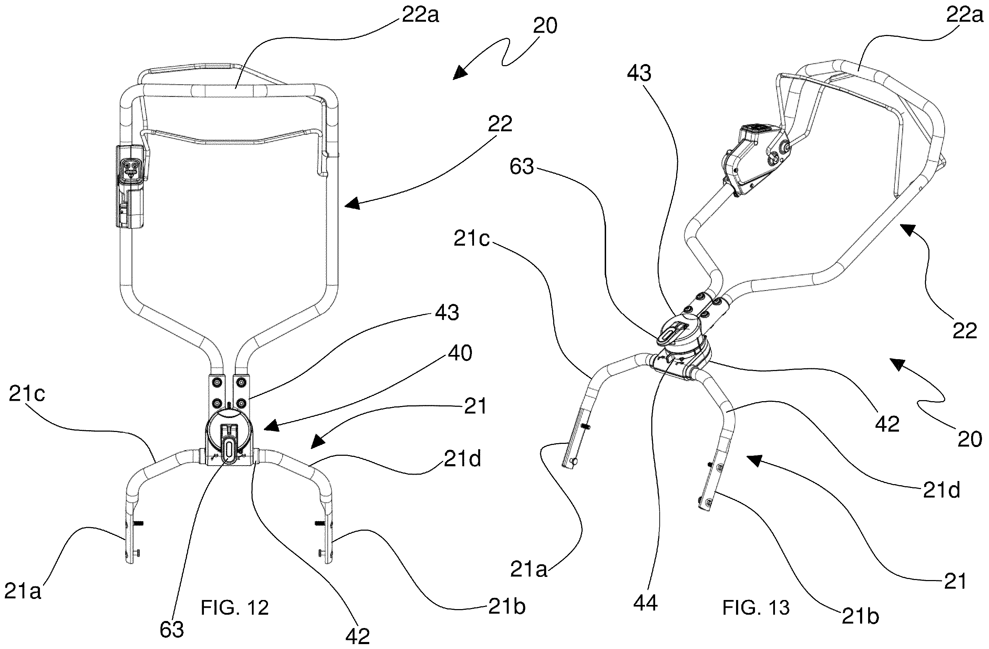

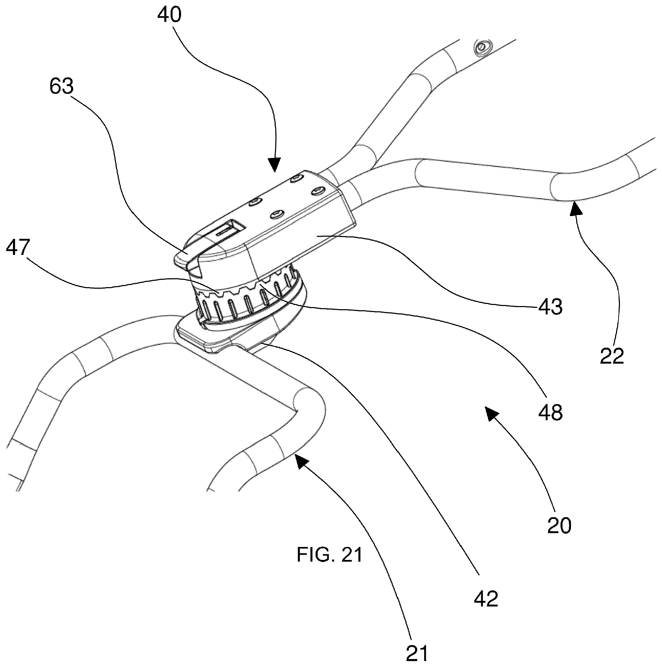

In a further non-claimed example, the coupling member comprises a joint 40: the drive handle 20 and the relative joint 40 are shown in detail in figures 6 and 7 in accordance with a non-claimed example, in figures 12-19 in accordance with a further non-claimed example, and in figure 21 in accordance with a further alternative non-claimed example: the three examples substantially differ for the architecture of the joint 40.

It should be noted that each of the embodiments allow the movement of the drive handle 20 along the control axis D, and consequently each of the embodiments contribute to obtaining the same advantages described above related to the movement of the handle along the axis D.

The drive handle 20 comprises a first member 21 extending for a first length between a first end, constrained to a rear portion 11 of the mobile device 1, and a second end carrying or comprising at least a first coupling element 42 of the joint 40. The drive handle 20 further comprises a second member 22, movable and distinct with respect to the first member 21 of the drive handle 20, extending for a second length between a first end comprising or carrying a second coupling element 43 of the joint 40 removably constrained to the second end of the first member 21 of the drive handle 20, and a second end comprising a gripping portion 22a configured to be grasped by an operator while driving the mobile device 1.

In more detail, the first member 21 of the drive handle 20 comprises a first coupling portion 21a configured to constrain at the rear to the mobile device 1 and laterally towards the right side 13 of the mobile device 1, and a second coupling portion 21b configured to constrain at the rear to the mobile device 1 and laterally towards the left side 12 of the mobile device 1: the second coupling portion 21b is distinct and distanced along the transverse axis W from the first coupling portion 21a. The first member 21 further comprises a first section 21c extending between the first coupling portion 21a and the joint 40, and a second section 21d extending between the second coupling portion 21b and the joint 40. In other words, the first and the second section 21c, 21d of the first member 21 of the drive handle 20 converge centrally in the joint 40: it should be noted that the drive handle comprises one and only one joint 40 constraining the first member 21 to the second member 22 of the drive handle 20.

**The first** and second section 21d are joined together to define a first member 21 of the drive handle 20 in a single body: this single body comprises the first coupling portion 21a, the first section 21c, the second section 21d and the second coupling portion 21b: in particular the first member 21 has an arcuate "U" shape, with a concavity facing the rear portion 11 of the mobile device 1. The first member 21 of the handle can be made of metallic material, for example from a metallic tubular suitably bent to define the inverted "U" shape. Alternatively, the first member 21 can be made of plastic or composite material.

The second member 22 of the handle extends laterally and in height from the joint 40 to define the gripping portion 22a of the drive handle 20.

The drive handle 20, comprising the first and the second member 21, 22, can define a 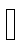 shape (Latin, gamma) or X shape. In general, the drive handle 20 centrally has a narrowing with respect to the coupling portions to the movable device 1 and with respect to the gripping portion 22a, in which the joint 40 is arranged at such central narrowing.

In particular, the joint 40 is centrally interposed between the first and the second coupling portion 21b of the drive handle 20 along the transverse axis W, in particular according to a view from the rear of the mobile device 1. In particular, according to a front view with respect to a plane ZW, passing through the vertical axis Z and the transverse axis W, the joint 40 is centrally interposed between the movement means 3 and aligned along a central axis of the mobile device 1.

Further, the joint 40 can be arranged in an intermediate zone, in terms of distances, between the coupling portions of the first member 21 and the gripping portion 22a of the second member 22: in particular, the joint 40 can be substantially equidistant between the coupling portions of the first member 21 and the gripping portion 22a of the second member 22, with a maximum difference between the two distances between 20% and 30%. In other words, defined as total length L of the handle, the joint 40 is substantially arranged at half of such length L, with a maximum difference between the length of the first member 21 and the length of the second member 22 between 20% and 30%.

The joint 40 comprises a fulcrum 41 defining a rotation axis B, whereby the handle is configured to rotate about the rotation axis B along a rotation plane orthogonal to the rotation axis B and transverse to the support plane SP of the mobile device 1. Such rotation determines the movement of the drive handle 20 along the control axis D towards the left side 12 and/or towards the right side 13 of the mobile device 1: in other words, a component of the rotary movement of the handle is oriented along the control axis D. The rotation plane is inclined with respect to the support plane SP by an angle between 30° and 70°, as shown in perspective view in the accompanying drawings 1-4.

Such a fulcrum 41 comprises the first coupling element 42 firmly constrained to the first member 21 of the drive handle 20 and comprising a through hole, the second coupling element 43 firmly constrained to the second member 22 of the drive handle 20 and comprising a through hole, and a through pin 61 passing through the through hole of the first and second coupling element 43 and extending along the rotation axis B of the joint 40. Such an architecture defines a first member 21 of the drive handle 20 fixed and constrained to the mobile device 1, while the second member 22 of the drive handle 20 has at least one rotational degree of freedom about such a fulcrum 41 defining the rotation axis B, allowing the lateral movement of the second member 22 along the control axis D.

In particular the rotation axis B of the joint 40 is transverse to the support plane SP, and substantially parallel to, or lying on, a plane XZ passing through the longitudinal axis X and the vertical axis Z. Furthermore, the rotation axis B intersects a central axis of the mobile device 1 aligned with the longitudinal axis X. Furthermore, the rotation axis B is inclined, with respect to the longitudinal axis X along such a plane XZ, by an angle between 30° and 70°. Such a non-claimed example is shown in figure 21.

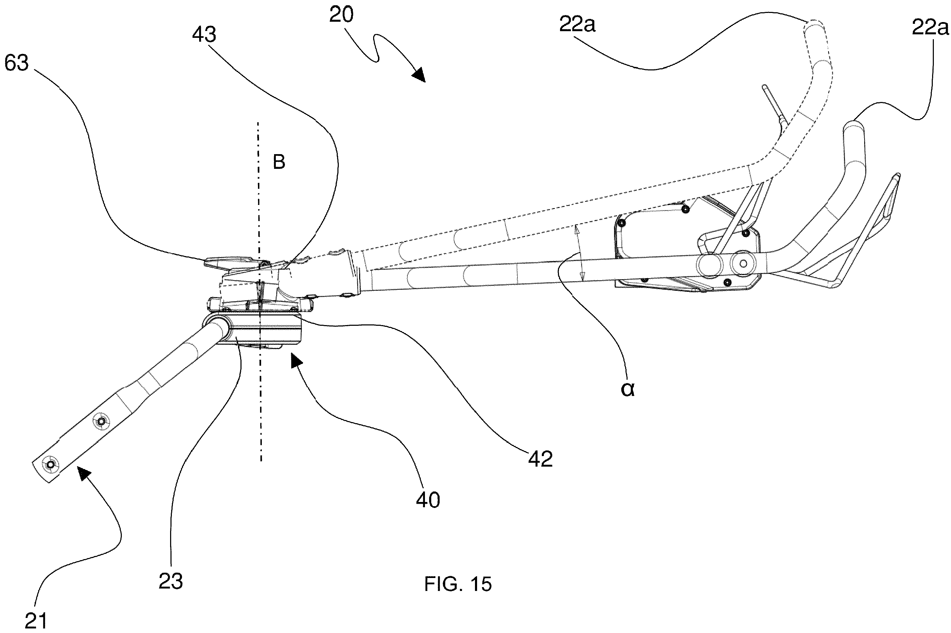

Figures 12-19 show a further non-claimed example in which the joint 40 is further configured to vary a height H of the gripping portion 22a of the drive handle 20 with respect to the support plane SP, as schematically shown in figure 15: such a height is defined in particular by the distance interposed between the gripping portion 22a of the handle and the support plane SP. In accordance with such a non-claimed example, the first member 21 of the handle is fixed and constrained at the rear of the mobile device 1, while the second member 22 is movable in height.

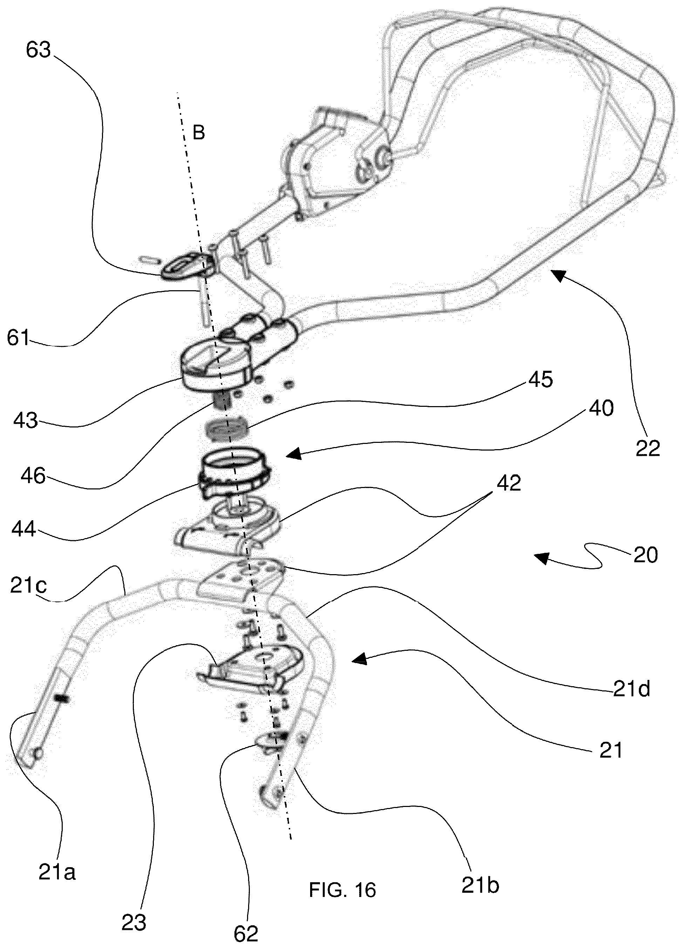

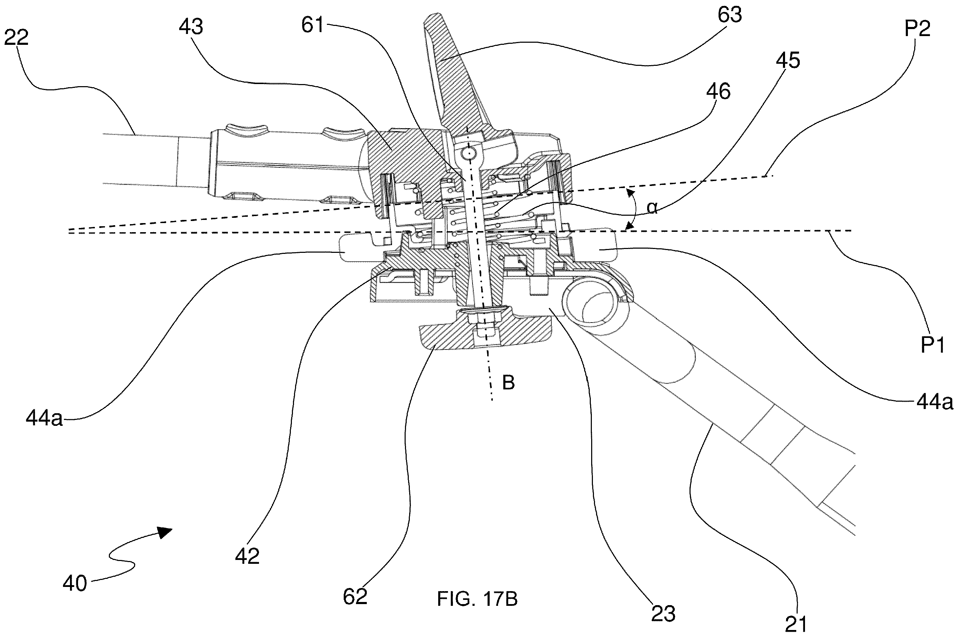

In this regard, the joint 40 comprises a regulating insert 44 having a substantially sectional wedge shape, as highlighted in figures 16 and 17B. The regulating insert 44 is interposed between the first coupling element 42 and the second coupling element 43 of the joint 40 and is movable in rotation about the rotation axis B with respect to the first and/or second coupling element 43 of the joint 40. A rotation of the regulating insert 44 of the joint 40 with respect to the first and/or the second coupling element 43 determines a contextual variation in height of the gripping portion 22a of the drive handle 20 with respect to the support plane SP as in figure 15.

The regulating insert 44 radially extends substantially about the rotation axis B of the joint 40 and extends in thickness between a first abutment plane, configured to contact the first coupling element 42 of the drive handle 20 and a second abutment plane, configured to contact the second coupling element 43 of the drive handle 20: the first and the second abutment plane are inclined relative to each other at an angle α between 4° and 20°, in particular between 6° and 15°, more in particular between 8° and 12°, preferably equal to 10°. In particular the first and the second abutment plane of the regulating insert 44 are orthogonal to the vertical axis Z, in particular in which the first and the second abutment plane of the regulating insert 44 are both orthogonal to a plane XZ passing through the longitudinal axis X and the vertical axis Z.

The first and second abutment plane of the regulating insert 44 thus determine a relative inclination between the first coupling element 42 and the second coupling element 43 and further determine the inclination of the rotation axis B of the joint 40 with respect to the support plane SP: such an inclination, as already specified, is projected on the plane XZ.

The regulating insert 44 is rotatable about the rotation axis B: a rotation of the regulating insert 44 with respect to the first and/or the second coupling element 43 of the joint 40 determines a contextual variation of the inclination of the rotation axis B of the joint 40 with respect to the support plane, and in particular with respect to the first or the second abutment element: such a variation of inclination consequently determines the height variation of the gripping portion 22a of the drive handle 20, as shown in figure 15. In fact, it should be noted that the second member 22, during the variation in height thereof, defines a rotary motion about a virtual axis C: such an axis C is defined as "virtual" because the joint 40 does not have a physical fulcrum aligned along the axis C, but such rotation is determined by the particular wedge shape of the regulating insert rotating about the rotation axis B which is orthogonal to the virtual axis C. The virtual axis C is schematically shown in figure 14B.

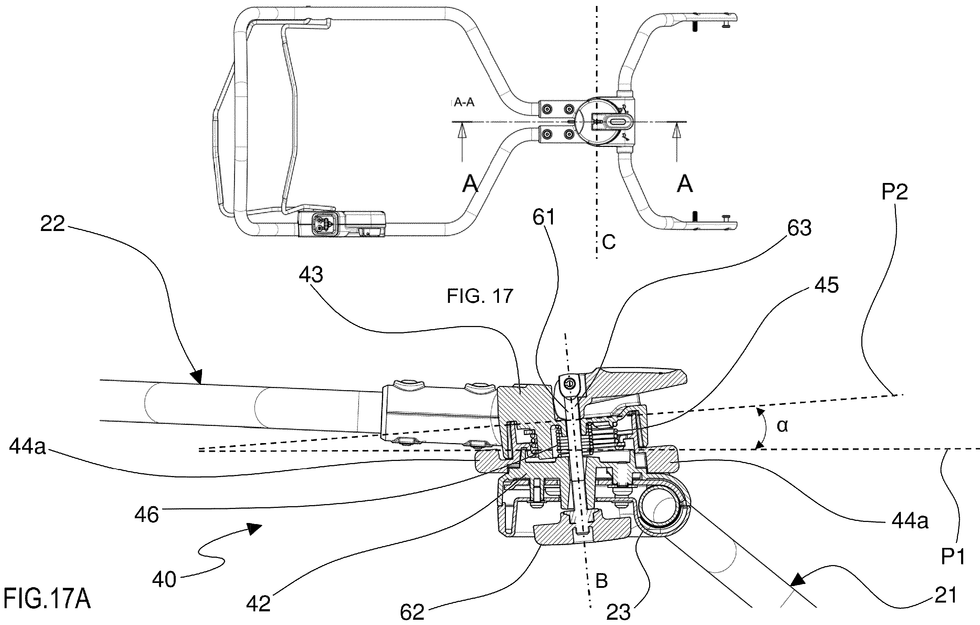

In more detail, the regulating insert 44 defines a disc-like regulating plate 44a having a wedge-like section along the plane XZ. Furthermore, the first coupling element 42 also defines a first disc-like plate 42a and has a first abutment plane adapted to contact the first abutment plane of the regulating plate 44a. Similarly, the second coupling element 43 defines a second disc-like plate 43a, and has a second abutment plane adapted to contact the second abutment plane of the regulating plate 44a. Since the first and the second abutment plane of the regulating plate 44a are inclined relative to each other by an angle α, the first abutment plane of the first plate 42a and the second abutment plane of the second plate 43a are also inclined relative to each other by the same angle α. Consequently, a rotation of the regulating insert 44 about the rotation axis B of the joint 40 determines a contextual rotation of the second member 22 of the drive handle 20 about the virtual axis C, schematically shown in figure 14A, 14B, 17A and 17B: the rotation axis B of the joint 40 is transverse, and in particular orthogonal, to the virtual axis C of the second member 22 of the handle. In fact, the rotation of the regulating insert about the rotation axis B determines a contextual variation in height of the gripping portion 22a of the second member 22 of the drive handle 20.

The second member 22 of the actuator handle 20 is positionable at least in:
- a lowered position in which the gripping portion 22a of the drive handle 20 has a first distance H with respect to the support plane SP of the mobile device 1 and in which the regulating insert 44 is positioned in a first angular position; and in
- a raised position in which the gripping portion 22a of the drive handle 20 has a second distance H" with respect to the support plane SP of the mobile device 1: the second distance is greater than the first distance, and the regulating insert 44 is positioned in a second angular position angularly rotated, along the rotation axis B of the joint 40, by 180° with respect to the first angular position.

The inclination of the second member 22 of the drive handle 20 can vary, between the lowered position and the raised position, by an angle between 4° and 20°, in particular between 6° and 15°, more in particular between 8° and 12°, preferably equal to 10°: the consequent variation in height of the handle thus depends on the extension in length of the second member 22 of the handle itself. It should be noted that such an inclination with respect to the support plane SP is measured on a plane XZ passing through the longitudinal axis X and the vertical axis Z of the mobile device 1.

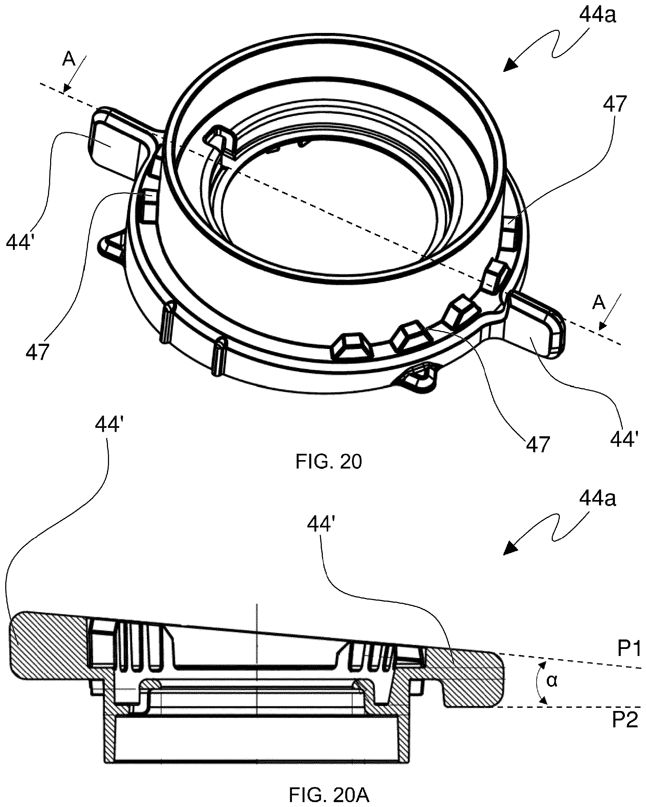

The joint 40 can further comprise a closing system, shown in figures 12 to 21, configured to connect the regulating plate 44a, the first plate 42a and the second plate 43a of the drive handle 20 to each other and to define a locking condition and an adjustment condition of the joint 40.

In particular, in the adjustment condition of the joint 40, the regulating plate 44a is movable by rotation about the rotation axis B to vary the height of the gripping portion 22a of the drive handle 20: furthermore, in the adjustment position the second member 22 of the drive handle is movable by rotation about the same rotation axis B to allow the movement of the gripping portion 22a along the control axis D.

Instead in the locking condition of the joint 40, the relative rotation between the regulating plate 44a and at least one of the first and the second plate 43a of the drive handle 20 is inhibited, so as to lock both the rotation of the second member 22 of the handle about the rotation axis B, and the height adjustment of the handle. In the locking condition, the closing system abuts the regulating plate 44a between the first and the second plate 43a of the joint 40 to prevent a relative rotation between the first plate 42a, the regulating plate 44a, and the second plate 43a.

The closing system comprises a through pin 61 passing transversely in the respective central holes of the joint 40, i.e., through the first plate 42a of the joint 40, the regulating plate 44a, and the second plate 43a of the joint 40. The closing system further comprises a first stop element 62, for example a screwable knob for adjusting a useful length of said through pin 61, engaged at a first end of the through pin 61 and defining an abutment against at least one of the first and the second plate 43a of the joint 40, as shown in the sectional view of figure 17B. The closing system further comprises a second stop element 63, for example a manually operable closing lever, engaged at a second end of the through pin 61 and movable between a closing position and an opening position.

In the closing position, the first plate 42a, the regulating plate 44a and the second plate 43a are forcedly compressively engaged with each other to define an axial constraint along the rotation axis B of the joint 40: the first stop element 62 is in forced abutment against the first or second plate 43a of the joint 40, while a portion of the second stop element 63 is in forced abutment against the other of the first and second plate 43a. The regulating plate 44a is likewise pressed along the rotation axis B of the joint 40 between the first and the second plate 43a: the closing position determines the locking condition of the joint 40.

Instead in the opening position, the through pin 61 allows an axial degree of freedom, substantially along the rotation axis B, to at least one of the first plate 42a, the second plate 43a and the regulating plate 44a, so as to allow a rotational degree of freedom of the regulating plate 44a.

In other words, when the closing system is in the closing position, the central pin 61 crushes therebetween the regulating insert 44, the first coupling element 42 and the second coupling element 43 of the joint 40, to prevent the mutual rotation thereof.

Further, to prevent the mutual rotation between the regulating insert 44 and the first and second coupling element 43, the regulating insert 44 comprises teeth 47 along at least one of the first and the second abutment plane: said teeth 47 comprise a sequence of protrusions and valleys extending in height and depth in a direction substantially parallel to the rotation axis B of the joint 40. Similarly, the first and/or second coupling element 43 also comprise respective teeth 48 configured to cooperate with the teeth 47 of the regulating insert 44 at least in the locking condition of the joint 40. The respective teeth of the regulating insert 44 and of the first and/or second coupling element 43 face each other and are configured to mesh with each other during the locking condition, so as to inhibit rotation. In other words, in such non-claimed example the second member 22 of the handle is locked in rotation when the closing system is in the closing position, corresponding to the locking condition of the joint 40. Thus in such a non-claimed example, when the closing system is in the opening position, the drive handle 20 is free to rotate about the rotation axis B of the joint 40, moving towards the left and towards the right, and furthermore the regulating insert 44 is also free to rotate about the rotation axis B with respect to the first coupling element 42 to further allow a variation in the height of the gripping portion (22a) of the handle. Figures 12 to 19 show such a non-claimed example in which the handle can be rotated about the rotation axis B, to facilitate the maintenance operations within the work area, and moved in height by means of the regulating insert 44.

In a non-claimed example shown in figure 21, the joint comprises the first coupling element 42 and the second coupling element 43 facing each other, each comprising respective teeth configured to cooperate with each other so as to inhibit a rotation of the first coupling element 42 with respect to the second coupling element 43: such teeth thus allow to inhibit the rotation of the second member 22 of the drive handle with respect to the first member 21 of the drive handle. The non-claimed example of figure 21 does not comprise the regulating insert 44: the first and the second coupling element 42, 43 of the joint 40 are thus in contact with each other to allow or inhibit mutual rotation. In such a non-claimed example, the joint 40 can comprise an auxiliary elastic element 46, for example a compression helical spring, interposed and acting between the first plate 42a and the second plate 43a of the drive handle 20: the auxiliary elastic element 46 is thus configured to exert a repulsive force between the first plate 42a and the second plate 43a of the drive handle 20 so as to decouple the teeth of the first plate 42a and the second plate 43a and consequently allow the rotation, about the rotation axis B of the joint, between the second member 22 and the first member 21.

The joint 40 can further comprise an elastic regulating element 45, for example a helical compression spring, interposed and acting between the regulating plate 44a and at least one of the first and the second plate 43a of the drive handle 20: the elastic regulating element 45 is configured to exert a repulsive force between the regulating plate 44a and said at least one of the first and second plate 43a of the drive handle 20. In the non-claimed example shown in the sectional view of figure 17B, the elastic regulating element 45 is interposed and acting between the regulating plate 44a and the second plate 43a of the second member 22 of the drive handle 20. When the joint 40 is in the adjustment condition, the elastic element axially distances, along the rotation axis B of the joint 40, the regulating plate 44a from the first and/or the second plate 43a of the drive handle 20: such a distancing allows a rotational degree of freedom of the regulating plate 44a with respect to the first and/or second plate 43a to determine the height adjustment of the drive handle 20. The elastic regulating element 45 is preferably concentric to the rotation axis B of the joint 40.

The elastic regulating element 45, combined with the teeth of the regulating insert 44, allows an operator, when the joint 40 is in the unlocking condition, to rotate the regulating insert 44 at discrete steps defined by the teeth themselves, thereby improving the manoeuvrability of the regulating insert. In other words, the elastic regulating element 45, combined with the teeth of the regulating insert 44, determines a resistant torque on the regulating insert 44 during a rotation thereof about the rotation axis B.

The elastic regulating element 45 and the auxiliary elastic element 46 can be concentric with each other, in which the auxiliary elastic element 46 is radially internal with respect to the elastic regulating element 45.

The drive handle 20 further comprises a constraining portion 23 between the joint 40 and at least one of the first and the second member 21, 22 of the drive handle 20: such a constraining portion determines a fixed coupling between the joint 40 and the first or second member 22 of the drive handle 20. The accompanying figures show a non-claimed example in which the constraining portion 23 securely connects the first member 21 of the handle to the first coupling element 42 of the joint 40.

In particular it should be noted that, in accordance with the non-claimed example of the accompanying drawings, the first member 21 of the drive handle 20 and the first coupling element 42 form a single body: in particular, the constraining portion 23 does not allow the rotation between the first member 21 of the handle and the first coupling element 42.

It should further be noted that during a condition of use of the mobile device 1 by an operator, the drive handle 20 is mostly stressed in a travel direction, and along a substantially vertical direction towards the ground: in fact, to lift the front wheels of the mobile device 1, the operator must apply a load on the drive handle 20 along a substantially vertical direction to leverage the rear wheels. Such behaviour is very often carried out by the operator during maintenance operations, thus defining a cyclic load on the handle and defining a torque momentum acting on the joint 40 about the virtual axis C: the fact that the joint 40 of the present drive handle 20 does not have a rotation fulcrum 41 aligned along the virtual axis C, thus determines a considerable advantage in terms of reliability of the joint 40. In addition, even if the locking system were left loose or in the opening position, the handle would not fall to the ground even if subjected to a vertical load applied by the operator. In fact, the presence of the coupling plates 42a, 43a extending and facing each other along a plane transverse to the direction of the applied load, makes it possible to avoid such an applied load cyclically stressing the joint 40 by twisting, but in fact determines a tensile load on the through pin 61 of the closing system.

In other words, the architecture of the joint 40 just described allows a height adjustment of the handle, as well as a rotation thereof towards the left and right, simultaneously improving the fatigue strength of the joint 40 itself.

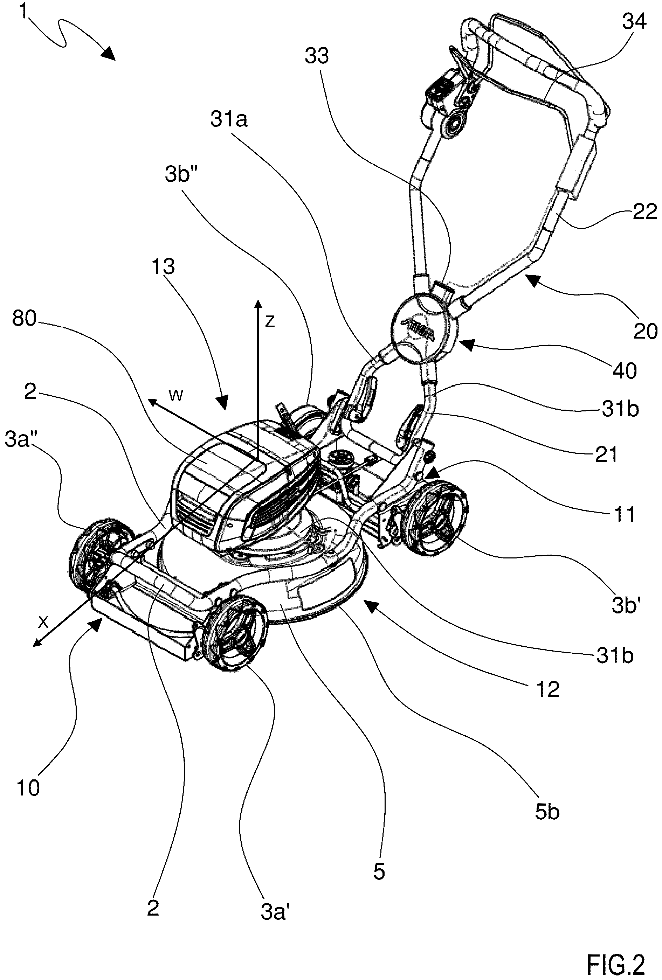

Further, the second member 22 is rotatable, in particular when in the unlocking position, with respect to the first member 21 about the rotation axis B between an operating position and a folded position. In the operating position, the second member 22 is arranged in one of the right lateral position, the left lateral position and the central position, as shown in figures 2-5: in other words, the second member, when arranged in the operating position, is configured to be grasped by an operator to guide the mobile device within the work area. The second member 22, when arranged in the left or right lateral position, is angularly rotated with respect to its central position by an angle between 20° and 60°, in particular between 25° and 45°.

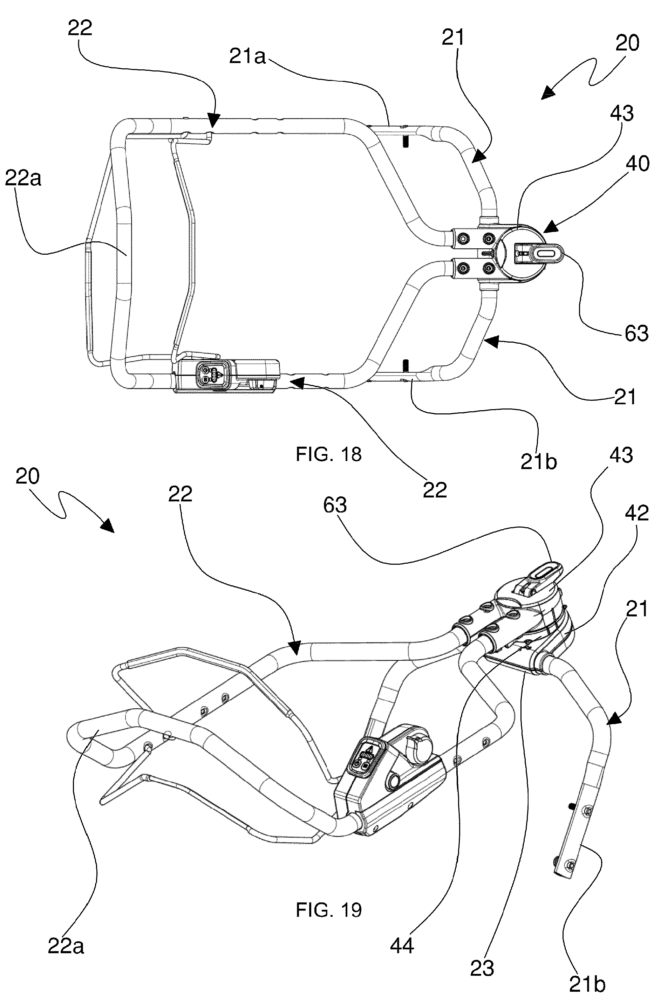

Instead in the folded position, the second member is angularly rotated, with respect to its central position and about the rotation axis B, by an angle between 170° and 190°, in particular equal to 180°, as shown in figures 18 and 19: in other terms the second member 22, with respect to the position in which the handle is configured to allow to guide the mobile device, is rotated up to being arranged above the support frame of the mobile device, i.e., above the mobile device itself and in a position near the mobile device. In particular, in the folded position, the mobile device is interposed, along the vertical axis Z, between the second member 22 of the drive handle 20 and the support plane SP.

The movement between the operating position and the folded position is allowed when the closing system is arranged in its opening position, and/or when the joint is in the adjustment condition and/or when the engagement system is in the unlocking condition.

Summarizing the above, the drive handle 20 is configured for:
- being arranged in the central, left lateral and/or right lateral position by rotating about the rotation axis B to allow an easy guiding of the mobile device to an operator during an operating condition,
- adjusting the height of its gripping portion 22a by rotating, about the rotation axis B, the regulating insert 44,
- being arranged in the folded position by rotating the second member 22 of the handle 20 about the rotation axis B substantially at an angle equal to 180° with respect to its central position so as to reduce the dimensions occupied by the handle.

### MOVABLE OPERATING BODY AND ACTUATION SYSTEM

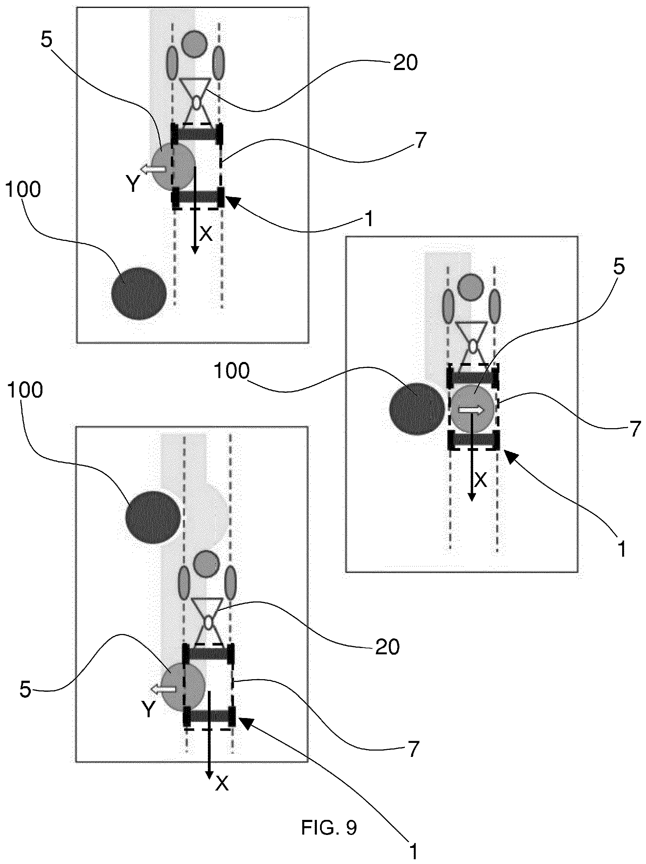

In accordance with the invention, the operating body 5 is movable, in particular for translation, along a translation axis Y horizontal to the ground. The translation axis Y is also substantially parallel to the support plane SP and substantially orthogonal to the longitudinal axis X. Furthermore, the translation axis Y can be substantially orthogonal to the vertical axis Z of the mobile device 1. In other words, during an operating condition of the device, such a configuration allows the lateral movement of the operating body 5 as shown in figures 8A, 8B and 9, defining a movement of the operating body 5 towards the left and towards the right. In fact, such lateral movement allows maintenance operations to be carried out in hard-to-reach areas, for example near a slope as in figure 8A or below a hedge as in figure 8B, or to avoid obstacles as shown in figure 9.

It should be further noted that the rotation axis A of the work tool 4 is substantially parallel to the vertical axis of the mobile device 1 and orthogonal to the translation axis Y of the operating body 5.

In particular, the operating body 5 is movable along the translation axis Y between a right lateral position and a left lateral position, in which the left and right lateral position define the maximum end limits within which the operating body 5 is movable along the translation axis. In the right lateral position, a first end portion 5a of the operating body 5 has a maximum distance with respect to the central axis of the mobile device 1, while a second end portion 5b of the operating body 5, opposite the first end portion 5a, has a minimum distance with respect to the central axis. The first and the second end portion 5b are placed along the translation axis Y: optionally the first end portion 5a is symmetrical with respect to the second end portion 5b with respect to the central axis of the mobile device 1. When the operating body 5 is instead in the left lateral position, the first end portion 5a of the operating body 5 has a minimum distance with respect to said central axis, while the second end portion 5b of the operating body 5 has a maximum distance with respect to the central axis. In particular, it should be noted that a line passing through the first and the second end portion 5b of the operating body 5 can be aligned or parallel with the translation axis Y.

The operating body 5 is further positionable in a central position interposed between the left lateral position and the right lateral position: in the central position, the first and the second end portion 5b of the operating body 5 can be equidistant from the central axis of the mobile device 1. In other words, the central position defines a median position of the operating body 5 between the left and right lateral position. A maximum movement value of the operating body 5 along the translation axis Y, with respect to the central position, is between 5 cm and 40 cm, and in particular between 10 cm and 30 cm.

In order to allow movement of the operating body 5 along the translation axis Y, the device comprises one or more rails 6 firmly constrained to the support frame 2 and carrying the operating body 5: such rails 6 can be bolted or welded to the support frame 2 and are fixed with respect to the frame. In particular, the rails 6 extend in length parallel to the transverse axis W of the mobile device 1. In particular, the rails 6 have an elongated cylindrical shape.

The mobile device 1 preferably comprises a first and a second rail 6a, 6b parallel to each other and extending in length along a respective direction in length parallel to the translation axis Y: the first and the second rail 6a, 6b extend in length between a respective first end facing the right side 13 of the mobile device 1, and a second end facing the left side 12 of the mobile device 1.

The first rail 6a is preferably arranged substantially at the front portion 10 of the mobile device 1, while the second rail 6b is preferably arranged at the rear portion 11 of the mobile device 1.

It should be noted that the guides support the operating body 5 vertically and prevent the movement thereof along the longitudinal axis X, simultaneously allowing the operating body to move along the translation axis Y.

The mobile device 1 further comprises one or more guides firmly constrained to the operating body 5 to form a single body cooperating with the respective rails 6. In particular, the guides cooperating with the rails 6 to support the operating body 5 vertically and to simultaneously allow the movement thereof along the translation axis Y: the guides are thus movable together with the operating body 5 along the translation axis Y. It should be noted that the guides support the operating body 5 vertically and prevent the movement thereof along the longitudinal axis X.

In particular, the mobile device 1 comprises a first and a second guide 8a, 8b each comprising a respective eyelet having a through opening: the first rail 6a is inserted in the through opening of the eyelet of the first guide, while the second rail 6b is inserted in the through opening of the eyelet of the second guide. The first and the second guide 8a, 8b are thus slidable on the respective first and second rail 6a, 6b, allowing the mobility of the operating body 5 along the translation axis Y.

In particular, the first guide is placed at the front portion 10 of the mobile device 1, while the second guide is placed at the rear portion 11 of the mobile device 1.

The through opening of each eyelet defines a central axis parallel to the translation axis Y: in particular, this central axis of each eyelet is substantially coincident with the extension in length of the rail which passes through it.

The eyelet can be made of metal or plastic. In particular, a bushing of low friction material, for example plastic or polytetrafluoroethylene PTFE, can be interposed between the eyelet and the rail so as to facilitate the relative sliding. Alternatively, a recirculating ball bearing can be interposed between the eyelet and the rail so as to further improve the relative sliding.

The operating body 5 is movable along the translation axis Y manually or automatically.

In the embodiment in which the operating body 5 is movable along the translation axis Y manually, as shown in figures 1 to 5, the mobile device 1 comprises an actuation system 30 connected to the drive handle 20 and configured to control the movement of the operating body 5 along the translation axis Y.

In a non-claimed example, the actuation system 30 comprises the joint 40 in one of the previously described forms so as to allow the movement of the drive handle 20 along the control axis D. In particular, the movement of the drive handle along the control axis D occurs by rotating the handle about the rotation axis B of the joint 40.

The actuation system 30, connected to the joint 40, is then configured to determine, in response to a displacement of the drive handle 20 along the control axis D, the movement of the operating body 5 along the translation axis Y.

In accordance with a preferred non-claimed example shown in figure 8A and 8B, a movement of the drive handle 20 along the control axis in a first direction determines a simultaneous movement of the operating body 5 along the translation axis Y in a second direction opposite the first direction and vice versa. In other words, a movement of the drive handle 20 to the left, determines a contextual movement of the operating body 5 to the right: similarly, a movement of the drive handle 20 to the right, determines a contextual movement of the operating body 5 to the left.

The actuation system 30 is a mechanical system which physically connects the drive handle 20 to the operating body 5.

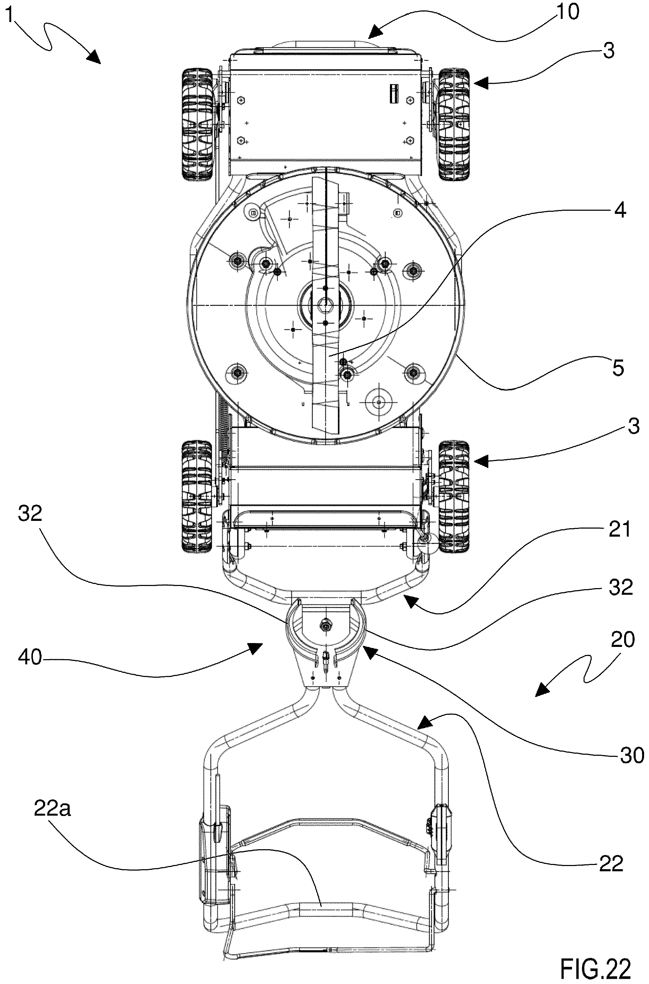

In the non-claimed example shown in figures 1-4 and 21-22, the joint 40 is configured to allow a rotation of the drive handle 20 about a rotation axis B, to determine the contextual displacement of the operating body along the translation axis Y.

The drive handle 20 lies on a transverse actuation plane with respect to a plane of the operating body 5 and is transverse with respect to the support plane. In the event of a rotation of the drive handle 20, the latter rotates along said actuation plane, such that the rotation axis B of the handle is orthogonal to the actuation plane on which the drive handle 20 lies.

The rotation axis B of the actuation system 30 can be located at a median portion of the drive handle 20 placed between the first and the second end of the handle. In other words, the median portion is interposed between, and optionally substantially equidistant from, the first and the second end of the actuator handle 20. Since the drive handle 20 is inclined, the actuation system 30 is located at a greater distance with respect to the support plane with respect to a similar distance between the first end and the support plane. In particular, the actuation system 30 is positioned at a distance from the support plane between 20 cm and 100 cm, in particular between 25 cm and 60 cm.

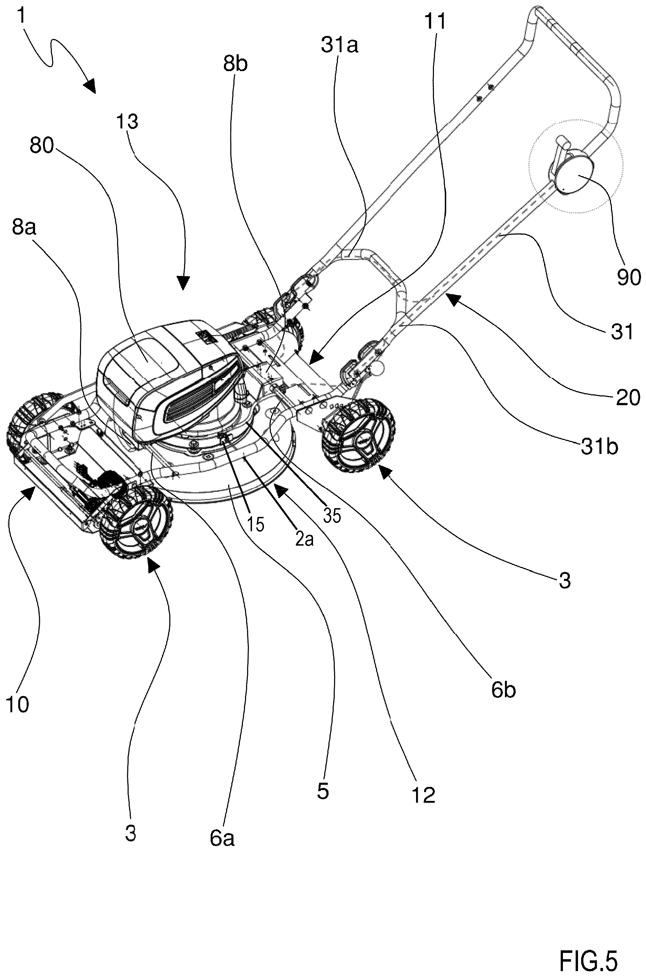

In an alternative non-claimed example to the joint 40, the actuation system 30 comprises a control lever 90 carried by the handle and drivable by an operator, for example by translation or by rotation, and operatively connected to the operating body 5, as shown in figure 5. The control lever 90 is thus configured to determine, when moved, a simultaneous movement of the operating body 5 along the translation axis Y.

The actuation system 30 preferably comprises one or more drive cables 31 connecting the actuation system 30, in particular the drive handle 20 or the control lever 90, to the operating body 5: the connection cables are configured to transmit a movement of the drive handle 20 along the control axis D, or a movement of the control lever 90, to the operating body 5 to determine the simultaneous movement along the translation axis Y. It should be noted that a movement of the drive handle 20 along the control axis D results in a proportional movement in amplitude of the operating body 5 along the translation axis Y, in particular in which an increase of a movement of the drive handle 20 along the control axis D results in a proportional increase of a movement of the operating body 5 along the translation axis Y. In other words, the more an operator moves the drive handle 20 towards the left or towards the right, the more the operating body 5 will move accordingly.

In detail, the actuation system 30 can comprise a first and a second drive cable 31a, 31b, as shown in figure 2, in which each first and second cable is placed in connection between the drive handle 20 and the operating body 5 or between the control lever 90 and the operating body 5: the first cable 31a can be configured to pull the operating body 5 towards the right along the translation axis Y, while the second cable 31b can be configured to pull the operating body 5 towards the left along the translation axis Y. Steel cables are flexible and can be made of steel or composed of steel wires. In particular, the first drive cable 31a extends in length between a first end, constrained to a first portion of the operating body, and a second end connected to the joint, in particular to a traction element 32 of the joint 40. Similarly, the second drive cable 31b extends in length between a first end, constrained to a second portion of the operating body, and a second end connected to the joint, in particular to a traction element 32 of the joint 40. The first and the second portion of the operating body 5 to which the respective cables 31a, 31b are constrained are opposite each other with respect to the rotation axis A of the work tool: in particular the first portion is placed on the right side of the mobile device, while the second portion is arranged on the left side of the mobile device.

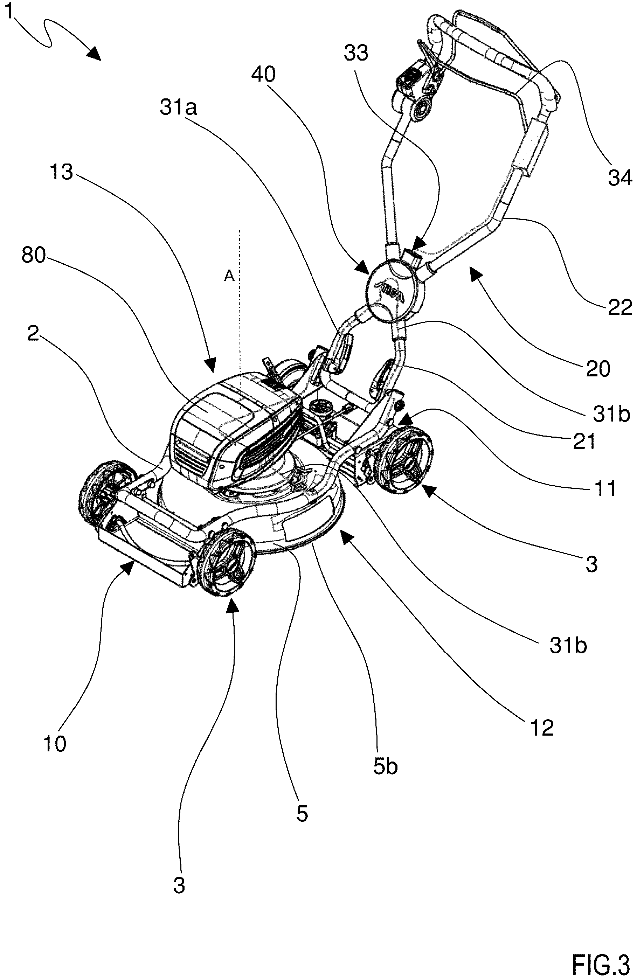

Alternatively, the actuation system 30 can comprise a single drive cable, as shown in figure 3, extending between a first end and a second end both connected to the operating body 5, and in which the single drive cable transits through the joint 40: the single cable can be wound to the joint 40 or is constrained to a traction element 32 of the joint. For example, the first end of the single drive cable is connected to a right portion of the operating body, while the second end of the single drive cable is connected to a left portion of the operating body.

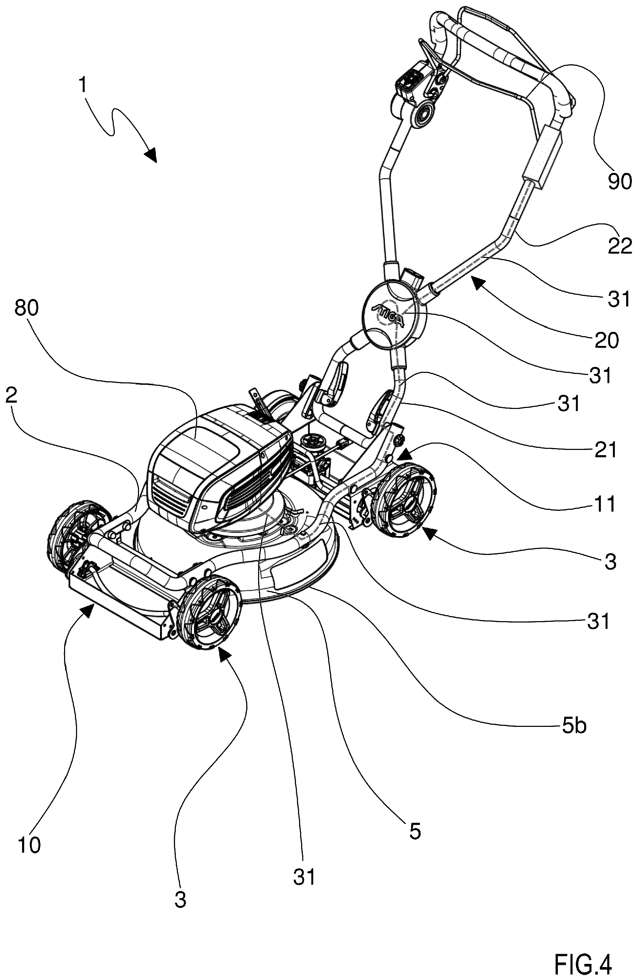

In a further alternative non-claimed example, the actuation system 30 can comprise a single drive cable, as shown in figure 4 and 5, extending between a first end, connected to a portion of the operating body, and a second end connected to the control lever 90. The single drive cable can pass through the joint 40 to reach the control lever located near or at the gripping portion 22a of the drive handle. In such a non-claimed example with a single drive cable, the actuation system 30 can comprise a return element, for example a traction or compression spring, interposed in connection between the operating body 5 and the support frame 2 and configured to move the operating body 5 along a return direction opposite a drive direction determined by the single drive cable. For example, if the single drive cable is configured to pull the operating body towards the right, the return element is configured to pull the operating body towards the left, such that when the operator releases the control lever 90, the operating body is moved by the return element towards the left, for example in the central position. Similarly, if the single drive cable is configured to pull the operating body towards the left, the return element is configured to pull the operating body towards the right, such that when the operator releases the control lever 90, the operating body is moved by the return element towards the right, for example in the central position.

In a further non-claimed example not shown in the accompanying drawings, the actuation system 30 can comprise a single drive cable, extending between a first end, connected to a portion of the operating body, and a second end connected to the joint 40, such that a rotation of the drive handle about the rotation axis B drives the single drive cable to pull the operating body to the left or right side. In such a non-claimed example with a single drive cable, the actuation system 30 can comprise a return element, for example a traction or compression spring, interposed in connection between the operating body 5 and the support frame 2 and configured to move the operating body 5 along a return direction opposite a drive direction determined by the single drive cable. For example, if the single drive cable is configured to pull the operating body towards the right, the return element is configured to pull the operating body towards the left, such that when the operator releases the drive handle or returns it to a central position, the operating body is moved by the return element towards the left, for example to the respective central position. Similarly, if the single drive cable is configured to pull the operating body towards the left, the return element is configured to pull the operating body towards the right, such that when the operator releases the drive handle or returns it to a central position, the operating body is moved by the return element towards the right, for example in the central position.

In a further non-claimed example shown in figure 5, the actuation system 30 can comprise one or more drive cables 31, for example one or two drive cables, in which at least one end of the drive cable is constrained to a pulling portion 2a of the support frame 2, and in which the drive cable passes through the operating body 5. Such an actuation system can further comprise at least one sheath 35 for each drive cable 31: the sheath 35 can be flexible or rigid. The drive cable 31 is inserted into the respective sheath 35 and extends between a first end 31', constrained to the pulling portion 2a of the support frame a, and a second end 31" connected to the control lever 90 or to the joint of the drive handle 20: similarly the sheath 35 extends between a respective first end 35' and second end 35". The operating body 5 comprises a respective pulling portion 15 comprising a through hole for the passage of the drive cable 31, in which the pulling portion 15 of the operating body 5 is interposed between the first end 31' of the drive cable 31 and the first end 35' of the sheath 35: in particular the first end 35' of the sheath 35 is abutting the pulling portion 15 of the operating body 5. Thereby, a traction of the winding cable 31 determines the simultaneous movement of the operating body towards the left or right side of the mobile device, in particular so that the first end 31' of the drive cable 31 approaches the pulling portion 15 of the operating body 5.

In the non-claimed example of figure 5, the actuation system 30 comprises a first drive cable 31a, a second drive cable 31b, a first sheath 35a mounted on the first drive cable 31a, a second sheath 35b mounted on the second drive cable 31b, a first pulling portion 2a' and a second pulling portion 2a" of the support frame 2, and a first pulling portion 15a and a second pulling portion 15b of the operating body, in which:
- the first end 31a' of the first drive cable 31a is constrained to the first pulling portion 2a' of the support frame 2, and the first sheath 35a is abutted against the first pulling portion 15a of the operating body 5, in which the first pulling portion 15a of the operating body 5 is interposed between the first sheath 35 and the first pulling portion 2a' of the support frame 2;
- the first end 31b' of the second drive cable 31b is constrained to the second pulling portion 2a" of the support frame 2, and the second sheath 35b is abutted against the second pulling portion 15b of the operating body 5, in which the second pulling portion 15b of the operating body 5 is interposed between the second sheath 35 and the second pulling portion 2a" of the support frame 2.

Figures 6 and 7 show a non-claimed example of the actuation system 30 of the drive handle 20 which allows the operating body 5 to be moved along the translation axis Y in response to a lateral movement of the drive handle 20 along the control axis D. In such an embodiment, the actuation system 30 comprises a traction element 32 constrained to the drive handle 20 at the joint 40 and movable by rotation substantially about the rotation axis B of said joint 40, such that a rotation of the drive handle 20 determines a similar rotation of the traction element 32. The traction element 32 is thus configured to pull, during a rotation of the drive handle 20, the cables 31 to move the operating body 5 along the translation axis Y towards the left side 12 and the right side 13 of the mobile device 1. The traction element 32 has a circular or semicircular shaped side surface radially spaced from the rotation axis B of the joint 40: the drive cables 31 are at least partially wound around the side surface of the traction element 32, as shown in figures 2 and 3. In particular, the first cable can be wound to a right portion of the side surface, while the second cable can be wound to a left portion of the side surface: it should be noted that the left portion of the side surface faces the left side 12 of the mobile device 1, while the right portion of the side surface faces the right side 13 of the mobile device 1.

In a non-claimed example, schematically shown for example in figures 2 and 3, the actuation system 30 comprises an engagement system 33 active on the joint 40 and configurable in a locking position in which the engagement system 33 is configured to lock the joint 40 to inhibit the movement of the drive handle 20 along the control axis D: in particular, the rotation of the drive handle 20 about the rotation axis B of the joint 40 is inhibited when the engagement system 33 is in the locking position. The engagement system 33 is further configurable in an unlocking position in which the engagement system 33 is configured to release the joint 40 and allow the movement of the drive handle 20 at least along the control axis D: in particular, the rotation of the drive handle 20 about the rotation axis B of the joint 40 is permitted when the engagement system 33 is in the unlocking position.

The engagement system 33 comprises an activation element 34, for example a handle or a lever, configured to be driven by an operator and to selectively arrange the engagement system 33 in the locking or unlocking position. The activation element 34 can be connected to the joint 40 by a connection cable interposed between the lever and the activation element 34. The engagement system 33, at the joint 40, can comprise a movable locking element controlled by the connection cable to allow or inhibit the rotation of the drive handle about the rotation axis B. In such a non-claimed example, the movable locking element is configured to cooperate with teeth placed on at least one of the first and the second member of the drive handle, for example on the first coupling element 42 of the first member 21.

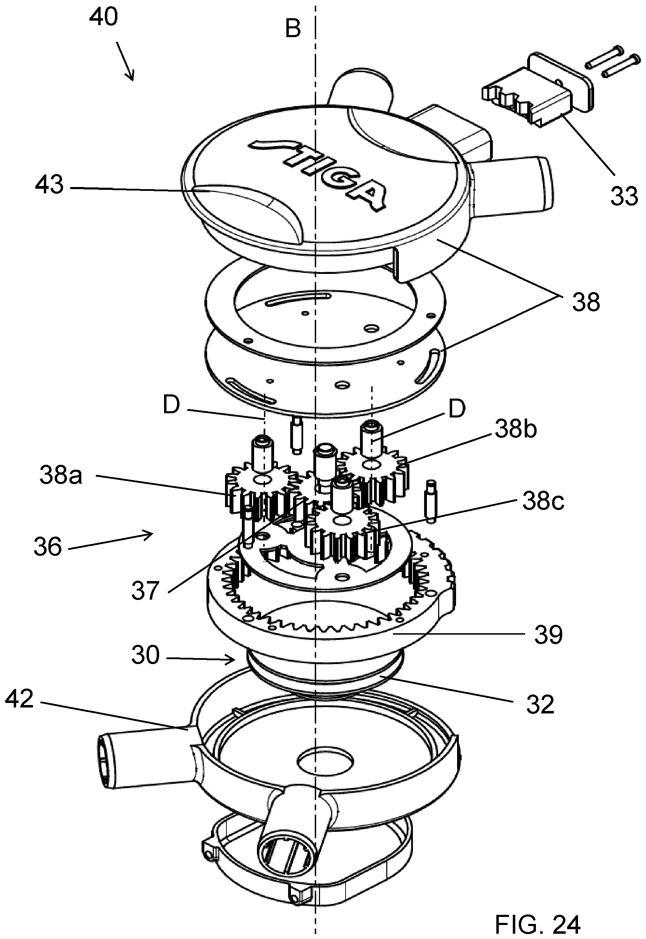

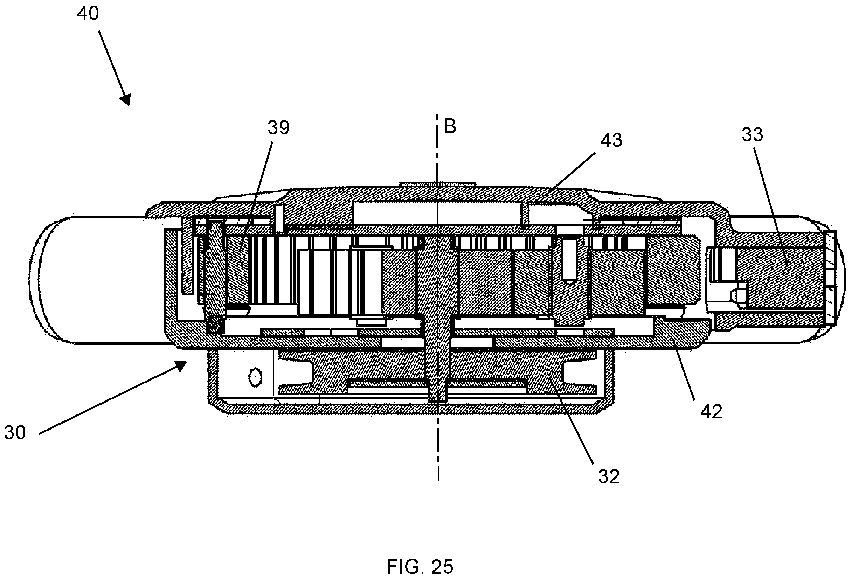

In accordance with a non-claimed example shown in figures 24 and 25, the actuation system 30 can comprise an epicycloidal gearbox 36 operatively interposed between the first member 21 and the second member 22 of the drive handle 20 and configured to increase or reduce, in particular increase, a lateral movement of the operating body 5 along the translation axis Y in response to the same rotation of the second member 22 of the drive handle about the rotation axis B. In other words, the epicycloidal gearset 36 defines a transmission relationship between the movement of the second member 22 of the drive handle 20, and the movement of the operating body 5: such a transmission relationship can be configured as a displacement multiplier or as a displacement reducer of the operating body 5, depending on the configuration of the epicycloidal gearset. The non-claimed example of figure 24 and 25 is adapted to multiply the displacement imposed by the second member 22 on the operating body 5.

In general terms, the epicycloidal gearset 36 comprises:
- a central pinion 37 having a rotation axis parallel to or substantially coincident with the rotation axis B of the joint 40;
- an outer circular crown 39, in particular having internal teeth, movable by rotation about the rotation axis of the central pinion 37;
- at least one gear train 38 carrying one or more planets 38a, 38b, 38c and movable by rotation about the rotation axis of the central pinion 37: the planets 38a, 38b, 38c are radially interposed between the central pinion 37 and the outer circular crown 39 and mesh with the central pinion 37 and with the outer circular crown 39.

In the non-claimed example of figures 24 and 25, the epicycloidal gearset 36 comprises:
- the outer circular crown 39 constrained and integral with the first member 21 of the drive handle 20: in particular the outer circular crown 39 is fixed with respect to the second member 22;
- the gear train 38 constrained and integral with the second member 22 of the drive handle 20, such that a rotation of the second member 22 about the rotation axis B determines a simultaneous rotation of the gear train 38 about the rotation axis of the gear train 38: it should be noted in particular that each planet 38a, 38b, 38c is movable by rotation about a rotation axis D thereof and about the rotation axis of the gear train,
- the central pinion 37 integral with the traction element 32: the traction element is optionally a pulley operatively connected to the drive cable(s) 31 to transmit motion to the operating body 5. For example, a drive cable can be wound or constrained to the pulley to transmit motion to the operating body 5.

Alternatively, the outer circular crown 39 can be integral with the second member 22, the gear train 38 constrained to the first member 21, and the central pinion 37 integral with the traction element 32.

In accordance with the embodiment comprising the epicycloidal gearset, the actuation system 30 can further comprise the engagement system 33, previously described, integral with the second member 22 and externally acting on the outer circular crown 39 of the epicycloidal gearset. In this regard, the outer circular crown 39 comprises teeth 39a extending radially externally and configured to cooperate with the engagement system 33 at least when the engagement system 33 is in the locking position. The joint 40 of the drive handle 20 can be further made in accordance with a further embodiment shown in figures 12 to 19: in such a case, the joint 40 can operate like the actuation system 30 previously described to move the operating body 5, or it can only allow the lateral movement of the drive handle 20, without therefore necessarily driving the operating body 5 along the translation direction Y or along the vertical direction Z.

Alternatively, in an embodiment not shown, the actuation system 30 can be configured to determine, upon a displacement of the drive handle 20 along the control axis, the movement of the operating body 5 along the vertical axis Z, such as to vary a distance interposed between the work tool 4 and the support plane: in other words, such a variation in height determines a similar variation in the distance between the work tool 4 and the ground during an operating condition, such as to vary a cutting height of the turfgrass.

In an embodiment in which the device is self-driving as shown in figure 10, the mobile device 1 does not comprise the drive handle 20. In such a configuration, the self-driving mobile device 1 comprises at least one obstacle detector 9 configured to detect one or more obstacles in the work area during a movement of the mobile device 1 in the work area. In particular, the obstacle detector 9 can comprise at least one of a proximity sensor, for example an ultrasonic or optical sensor, a camera, or a flight time sensor. If a camera is present, a control unit 50 can be configured to detect and optionally recognize an obstacle 100, for example, identifying the obstacle 100. The control system related to self-driving can comprise a peripheral wire system, a GPS sensor guidance system, or one or more cameras. The self-driving control system will not be described in detail, as it is already part of the prior art.

The self-driving mobile device 1 can further comprise at least one actuator operatively connected to the operating body 5 and configured to move the operating body 5 along the translation axis Y, in particular towards the left side 12 or the right side 13 of the mobile device 1: in such a configuration, such an actuator thus defines the actuation system 30 of the operating body 5.

A control unit 50 of the mobile device 1 is operatively connected to the traction motor of the mobile device 1, to the aforementioned obstacle detector 9 and to the actuator of the operating body 5: the control unit 50 can be configured to receive from the obstacle detector 9 at least one signal representative of the presence of an obstacle 100 along a path of the mobile device 1, and if the detector detects an obstacle 100, command the actuator to move the operating body 5 to the central position.

The control unit 50 can be further configured to determine whether the obstacle 100 is at the left side 12 or right side of the mobile device 1, and determine whether the operating body 5 is in the left lateral position or the right lateral position. The control unit 50 is thus configured for:
- if the obstacle 100 is established to be at the left side 12 of the mobile device 1 and the operating body 5 is established to be in the left lateral position, commanding the actuator to move the operating body 5 from the left lateral position to the central position or the right lateral position;
- if the obstacle 100 is established to be at the right side 13 of the mobile device 1 and the operating body 5 is established to be in the right lateral position, commanding the actuator to move the operating body 5 from the right lateral position to the central position or to the left lateral position;
- if the obstacle 100 is established to be at the left side 12 of the mobile device 1 and the operating body 5 is established to be in the right lateral position, keep the operating body 5 in the right lateral position;
- if the obstacle 100 is established to be at the right side 13 of the mobile device 1 and the operating body 5 is established to be in the left lateral position, keep the operating body 5 in the left lateral position.

Furthermore, if the obstacle 100 is established to be at the right side 13 and the left side 12 of the mobile device 1, the control unit 50 is configured to control the actuator to move the operating body 5 from the right or left lateral position to the central position and optionally control stopping the movement means 3.

### ADVANTAGES OF THE INVENTION

The present invention allows to operate more easily in zones adjacent to obstacles, such as trees, hedges or flower beds. In particular, the present invention allows a greater flexibility of use of the mobile device 1, in that the translation of the operating body 5, in particular of the cutting plate, allows to get closer to otherwise inaccessible areas.

It should further be noted that in the event of the presence of peripheral hedges, it is often necessary to operate with mobile device 1 below part of the hedge itself, up to the root of the hedge itself. The mobile device 1 of the present invention allows to operate below the hedge, so as to speed up and facilitate the maintenance operations within the work area.

## Claims

1. Self-driving mobile device (1) for land maintenance, comprising a support frame (2) bearing:
- movement means (3) configured to allow or determine a movement of the mobile device (1), said movement means (3) defining a support plane (SP) for the mobile device (1);
- at least one work tool (4) configured to perform maintenance operations;
- an operating body (5) carrying and/or housing said work tool (4),
wherein said mobile device (1) extends:
- in length between a front portion (10) and a rear portion (11) to define a longitudinal axis (X) of the mobile device (1),
- in height along a vertical axis (Z) orthogonal to said longitudinal axis (X) and to said support plane (SP),
- in width along a transverse axis (W) between a left side (12), interposed as connection between the front portion (10) and the rear portion (11) of the mobile device (1), and a right side (13), also interposed as connection between the front portion (10) and the rear portion (11) of the mobile device (1), said right side (13) being opposite and positioned at a distance from said left side (12), said transverse axis (W) being orthogonal to said longitudinal axis (X),
wherein said mobile device (1) comprises at least:
- a traction motor operatively connected to the movement means (3) for driving and moving the mobile device (1),
- at least one obstacle detector (9) configured to detect one or more obstacles during a movement of the mobile device (1),
- at least one actuator effective between said operating body (5) and said support frame (2) and configured to allow said operating body (5) to be moved transversely to said support frame (2),
- at least one control unit (50) operatively connected to said traction motor, said obstacle detector (9) and said actuator,
**characterised in that** said mobile device (1) comprises one or more rails (6) constraining the operating body (5) to the support frame (2) and configured to allow the movement of the operating body (5) along at least one translation axis (Y),
said translation axis (Y) being parallel or coincident with said transverse axis (W) or said translation axis (Y) defining with said transverse axis (W) an angle less than 45°.

2. Mobile device (1) according to the preceding claim, wherein the mobile device (1) is a self-driving mobile device (1) for maintenance of lawns or gardens or agricultural land,
wherein the operating body (5) defines an actuation region for maintenance operations by means of the mobile device (1), wherein said traction motor is an electric motor, and
wherein said control unit is configured to generate at least one control signal to said actuator upon receipt by said obstacle detector (9) of at least one signal representative of the presence of an obstacle (100) along a path of the mobile device (1).

3. Mobile device (2) according to claim 1 or claim 2, wherein the operating body (5) is movable along said translation axis (Y) towards said left side (12) and towards said right side (13) of the mobile device (1), and/or
wherein said translation axis (Y) is parallel to said support plane (SP),
wherein during an operating condition of the mobile device (1) the operating body (5) is movable parallel to the ground,
said translation axis (Y) being:
- orthogonal to said longitudinal axis (X) of the mobile device (1), and
- orthogonal to said vertical axis (Z),
wherein the operating body (5) is movable:
- in height along said vertical axis (Z) between a distal position and a position close to the ground with respect to the support plane (SP), and
- along said translation axis (Y),
said vertical axis (Z) and said translation axis (Y) being orthogonal to each other.

4. Mobile device (1) according to any one of the preceding claims,
wherein a straight motion condition of the mobile device (1) defines a longitudinal advancement direction, said longitudinal advancement direction being coincident with said longitudinal axis (X) of the mobile device (1), and/or
wherein the movement means (3) comprise a front movement axis (3a) including a left front wheel (3a') and a right front wheel (3a"), and a rear movement axis (3b) including a left rear wheel (3b') and a right rear wheel (3b"),
said longitudinal axis (X) being orthogonal to said front movement axis (3a) and/or to said rear movement axis (3b) of the mobile device (1),
said translation axis (Y) being parallel to said front movement axis (3a) and/or to said rear movement axis (3b),
wherein, a first point being given by the intersection between said longitudinal axis (X) and the projection of said translation axis (Y) on a plane parallel to said support plane (SP) and passing through said longitudinal axis (X), a second point being given by the intersection between said longitudinal axis (X) and the projection of said front movement axis (3a) on a plane parallel to said support plane (SP) and passing through said longitudinal axis (X) and a third point being given by the intersection between said longitudinal axis (X) and the projection of said rear movement axis (3b) on a plane parallel to said support plane (SP) and passing through said longitudinal axis (X), it is possible that said first point is interposed between said second point and said third point,
wherein said longitudinal axis (X) is equidistant from a left wheel and a right wheel of the same movement axis of the mobile device (1), said longitudinal axis being an axis of longitudinal symmetry of the mobile device (1), and/or
wherein the operating body (5) is movable along the translation axis (Y) between a right lateral position and a left lateral position, said left and right lateral position defining the maximum end limits within which said operating body (5) is movable along the translation axis (Y), wherein a maximum translation between said longitudinal axis (X) and said right and/or left lateral position is between 10 cm and 80 cm, and/or
wherein:
- when the operating body (5) is in the right lateral position,
∘ a first end portion (5a) of the operating body (5) has a maximum distance with respect to said longitudinal axis (X), and
∘ a second end portion (5b) of the operating body (5), opposite said first end portion (5a), has a minimum distance with respect to the longitudinal axis (X),
- when the operating body (5) is in the left lateral position,
o the first end portion (5a) of the operating body (5) has a minimum distance with respect to said longitudinal axis (X), and
o the second end portion (5b) of the operating body (5), opposite said first end portion (5a), has a maximum distance with respect to the longitudinal axis (X),
wherein a line passing through said first and second end portion (5b) of the operating body (5) is coincident with or parallel to the translation axis (Y), and/or
wherein the operating body (5) is positionable in a central position interposed between said left lateral position and said right lateral position, said central position acting as a reference position for said operating body (5),
in said central position, the first and the second end portion (5b) of the operating body (5) being equidistant with respect to the longitudinal axis (X) of the mobile device (1),
wherein, in said central position, the operating body (5) does not emerge or emerges less from the peripheral shape (7) of the mobile device (1) with respect to the left or right lateral position.

5. Mobile device (1) according to any one of the preceding claims, wherein an envelope of the movement means (3) defines a peripheral shape (7) of the mobile device (1),
wherein a movement of the operating body (5) along the translation axis (Y) allows the operating body (5) to emerge at a variable height with respect to said peripheral shape (7),
wherein the movement means (3) comprise:
- at least two wheels placed at a front portion (10) of the mobile device (1), and
- at least two wheels at a rear portion (11) of the mobile device (1),
said wheels defining the peripheral shape (7) of the mobile device (1), wherein:
- when the operating body (5) is in the right lateral position, the operating body (5) emerges partially to the right with respect to said peripheral shape (7) and does not emerge to the left with respect to said peripheral shape (7),
- when the operating body (5) is in the left lateral position, the operating body (5) emerges partially to the left with respect to said peripheral shape (7) and does not emerge to the right with respect to said peripheral shape (7), and/or
wherein the movable device (1) is a lawnmower and the work tool (4) is a rotary blade movable by rotation about a rotation axis (A),
wherein said translation axis (Y) is to said rotation axis (A),
wherein said rotation axis (A) of the rotary blade is movable for translation along said translation axis (Y) at the same time as the operating body (5), and
wherein said rotation axis (A) of the rotary blade is orthogonal to the support plane when arranged in the right lateral position, in the left lateral position, and in the central position of the operating body (5).

6. Mobile device (1) according to any one of the preceding claims,
wherein said one or more rails (6) comprise a first and a second rail (6a, 6b) parallel to each other and extending in length along a respective direction parallel to the translation axis (Y),
wherein the first rail (6a) is arranged at the front portion (10) of the movable device (1), while the second rail (6b) is arranged at the rear portion (11) of the movable device (1),
wherein said lengthwise direction of the first rail (6a) and the second rail (6b) is orthogonal to the longitudinal axis (X) and parallel to the support plane (SP), said lengthwise direction of the first rail (6a) and the second rail (6b) being parallel to the transverse axis (W) defined by the extension in width of the mobile device (1),
wherein the operating body (5) comprises a first and a second guide (8a, 8b) each cooperating with the first and the second rail (6a, 6b), respectively, to allow the relative movement between the rail and the operating body (5),
said first and second guide (8a, 8b) each comprising at least one respective eyelet having a through opening, the first rail (6a) being inserted in the through opening of the eyelet of the first guide (8a), while the second rail (6b) being inserted in the through opening of the eyelet of the second guide (8b),
the first and the second guide (8a, 8b) being slidable on the respective first and second rail (6a, 6b) to allow the mobility of the operating body (5) along the translation axis (Y),
wherein the first guide (8a) is located at the front portion (10) of the mobile device (1), while the second guide (8b) is located at the rear portion (11) of the mobile device (1).

7. Mobile device (1) according to any one of the preceding claims, wherein said at least one actuator is operatively connected to the operating body (5) and is configured to move the operating body (5) along the translation axis (Y).

8. Mobile device (1) according to any one of the preceding claims, wherein said control unit (50) is configured for:
- receiving from said obstacle detector (9) at least one signal representative of the presence of an obstacle (100) along a path of the mobile device (1),
- if said detector detects an obstacle (100), commanding the actuator to move the operating body (5) along the translation axis (Y) towards the central position.

9. Mobile device (1) according to claim 4, wherein said control unit (50) is configured for:
- determining whether said obstacle (100) is at the left (12) or right side of the mobile device (1);
- determining whether the operating body (5) is in the left lateral position or in the right lateral position.

10. Mobile device (1) according to claim 4 or claim 9, wherein:
- if said obstacle (100) is established to be at the left side (12) of the mobile device (1) and the operating body (5) is established to be in the left lateral position, the control unit (50) is configured to command the actuator to move the operating body (5) from the left lateral position to the central position or to the right lateral position; and/or
- if said obstacle (100) is established to be at the right side (13) of the mobile device (1) and the operating body (5) is established to be in the right lateral position, the control unit (50) is configured to command the actuator to move the operating body (5) from the right lateral position to the central position or to the left lateral position; and/or
- if said obstacle (100) is established to be at the left side (12) of the mobile device (1) and the operating body (5) is established to be in the central position, the control unit (50) is configured to command the actuator to move the operating body (5) from the central position to the right lateral position; and/or
- if said obstacle (100) is established to be at the right side (13) of the mobile device (1) and the operating body (5) is established to be in the central position, the control unit (50) is configured to command the actuator to move the operating body (5) from the central position to the left lateral position; and/or
- if said obstacle (100) is established to be at the left side (12) of the mobile device (1) and the operating body (5) is established to be in the right lateral position, the control unit (50) is configured to maintain the operating body (5) in the right lateral position;
- if said obstacle (100) is established to be at the right side (13) of the mobile device (1) and the operating body (5) is established to be in the left lateral position, the control unit (50) is configured to maintain the operating body (5) in the left lateral position;
- if said obstacle (100) is established to be at the right side (13) and the left side (12) of the mobile device (1), the control unit (50) is configured to command the actuator to move the operating body (5) in the central position and/or to command said movement means (3) so that a manoeuvre useful for disengaging the mobile device (1) from said obstacle (100) is performed by simultaneously commanding the stop of the work tool (4).

11. Mobile device (1) according to any one of the preceding claims, wherein the obstacle detector (9) comprises at least one of:
- a proximity sensor;
- an inertial sensor;
- a video camera;
- a flight time sensor,
- an impact detector configured to detect an obstacle (100) in response to an impact with said obstacle (100).

12. Mobile device (1) according to claim 11, wherein said impact detector comprises a flap movable between:
- an extended position, in which said flap emerges laterally to define a detection extension, said flap emerging with respect to a peripheral shape (7) of the mobile device (1), and
- a closed position in which said flap reduces its lateral dimension with respect to said detection extension,
and in which said impact detector comprises an elastic element operatively connected to said flap and configured to exert an elastic force on said flap in a direction adapted to arrange said flap in the extended position.

13. Mobile device (1) according to any one of the preceding claims, wherein the mobile device (1) comprises a self-driving system comprising a peripheral wire system.

14. Mobile device (1) according to any one of the preceding claims, wherein the mobile device (1) comprises a self-driving system comprising a guidance system by means of a GNSS sensor.

15. Mobile device (1) according to any one of the preceding claims, wherein the mobile device (1) comprises a self-driving system comprising a vision system provided with one or more cameras.

## Patentansprüche

1. Selbstfahrende mobile Vorrichtung (1) für die Bodenpflege, umfassend einen Stützrahmen (2), der Folgendes trägt:
- Bewegungsmittel (3), die dazu konfiguriert sind, eine Bewegung der mobilen Vorrichtung (1) zu ermöglichen oder zu bestimmen, wobei die Bewegungsmittel (3) eine Stützebene (SP) für die mobile Vorrichtung (1) definieren;
- mindestens ein Arbeitswerkzeug (4), das dazu konfiguriert ist, Pflegearbeiten durchzuführen;
- einen Betriebskörper (5), der das Arbeitswerkzeug (4) trägt und/oder aufnimmt,
wobei sich die mobile Vorrichtung (1) wie folgt erstreckt:
- in der Länge zwischen einem vorderen Abschnitt (10) und einem hinteren Abschnitt (11), um eine Längsachse (X) der mobilen Vorrichtung (1) zu definieren,
- in der Höhe entlang einer vertikalen Achse (Z) orthogonal zu der Längsachse (X) und zu der Stützebene (SP),
- in der Breite entlang einer Querachse (W) zwischen einer linken Seite (12), die als Verbindung zwischen dem vorderen Abschnitt (10) und dem hinteren Abschnitt (11) der mobilen Vorrichtung (1) eingefügt ist, und einer rechten Seite (13), die ebenfalls als Verbindung zwischen dem vorderen Abschnitt (10) und dem hinteren Abschnitt (11) der mobilen Vorrichtung (1) eingefügt ist, wobei die rechte Seite (13) der linken Seite (12) gegenüberliegt und in einem Abstand von dieser positioniert ist, wobei die Querachse (W) orthogonal zu der Längsachse (X) ist,
wobei die mobile Vorrichtung (1) mindestens Folgendes umfasst:
- einen Traktionsmotor, der operativ mit dem Bewegungsmittel (3) verbunden ist, um die mobile Vorrichtung (1) anzutreiben und zu bewegen,
- mindestens einen Hindernisdetektor (9), der dazu konfiguriert ist, ein oder mehrere Hindernisse während einer Bewegung der mobilen Vorrichtung (1) zu erfassen,
- mindestens einen Aktuator, der zwischen dem Betriebskörper (5) und dem Stützrahmen (2) wirksam ist und dazu konfiguriert ist, eine Bewegung des Betriebskörpers (5) quer zu dem Stützrahmen (2) zu ermöglichen,
- mindestens eine Steuereinheit (50), die operativ mit dem Traktionsmotor, dem Hindernisdetektor (9) und dem Aktuator verbunden ist,
**dadurch gekennzeichnet, dass** die mobile Vorrichtung (1) eine oder mehrere Schienen (6) umfasst, die den Betriebskörper (5) an dem Stützrahmen (2) einschränken und dazu konfiguriert sind, die Bewegung des Betriebskörpers (5) entlang mindestens einer Translationsachse (Y) zu ermöglichen,
wobei die Translationsachse (Y) parallel zu oder zusammenfallend mit der Querachse (W) ist oder die Translationsachse (Y) mit der Querachse (W) einen Winkel von weniger als 45° definiert.

2. Mobile Vorrichtung (1) nach dem vorstehenden Anspruch, wobei die mobile Vorrichtung (1) eine selbstfahrende mobile Vorrichtung (1) zum Pflegen von Rasenflächen oder Gärten oder landwirtschaftlichen Flächen ist,
wobei der Betriebskörper (5) einen Betätigungsbereich für Wartungsarbeiten mittels der mobilen Vorrichtung (1) definiert.
wobei der Traktionsmotor ein Elektromotor ist, und
wobei die Steuereinheit dazu konfiguriert ist, mindestens ein Steuersignal für den Aktuator zu erzeugen, wenn der Hindernisdetektor (9) mindestens ein Signal empfängt, das die Anwesenheit eines Hindernisses (100) entlang eines Pfads der mobilen Vorrichtung (1) anzeigt.

3. Mobile Vorrichtung (2) nach Anspruch 1 oder 2, wobei der Betriebskörper (5) entlang der Translationsachse (Y) in Richtung der linken Seite (12) und in Richtung der rechten Seite (13) der mobilen Vorrichtung (1) bewegbar ist und/oder
wobei die Translationsachse (Y) parallel zu der Stützebene (SP) ist,
wobei während eines Betriebszustands der mobilen Vorrichtung (1) der Betriebskörper (5) parallel zu dem Boden bewegbar ist,
wobei die Translationsachse (Y):
- orthogonal zu der Längsachse (X) der mobilen Vorrichtung (1) und
- orthogonal zu der vertikalen Achse (Z) ist,
wobei der Betriebskörper (5) bewegbar ist:
- in der Höhe entlang der vertikalen Achse (Z) zwischen einer distalen Position und einer Position nahe dem Boden in Bezug auf die Stützebene (SP), und
- entlang der Translationsachse (Y),
wobei die vertikale Achse (Z) und die Translationsachse (Y) orthogonal zueinander sind.

4. Mobile Vorrichtung (1) nach einem der vorstehenden Ansprüche, wobei eine geradlinige Bewegungsbedingung der mobilen Vorrichtung (1) eine Längsvorschubrichtung definiert, wobei die Längsvorschubrichtung mit der Längsachse (X) der mobilen Vorrichtung (1) zusammenfällt, und/oder
wobei die Bewegungsmittel (3) eine vordere Bewegungsachse (3a), die ein linkes Vorderrad (3a') und ein rechtes Vorderrad (3a") enthält, und eine hintere Bewegungsachse (3b), die ein linkes Hinterrad (3b') und ein rechtes Hinterrad (3b") enthält, umfassen,
wobei die Längsachse (X) orthogonal zu der vorderen Bewegungsachse (3a) und/oder zu der hinteren Bewegungsachse (3b) der mobilen Vorrichtung (1) ist,
wobei die Translationsachse (Y) parallel zu der vorderen Bewegungsachse (3a) und/oder zu der hinteren Bewegungsachse (3b) ist,
wobei ein erster Punkt durch den Schnittpunkt zwischen der Längsachse (X) und der Projektion der Translationsachse (Y) auf einer parallel zu der Stützebene (SP) und durch die Längsachse (X) verlaufenden Ebene gegeben ist, ein zweiter Punkt durch den Schnittpunkt zwischen der Längsachse (X) und der Projektion der vorderen Bewegungsachse (3a) auf einer parallel zu der Stützebene (SP) und durch die Längsachse (X) verlaufenden Ebene gegeben ist und ein dritter Punkt durch den Schnittpunkt zwischen der Längsachse (X) und der Projektion der hinteren Bewegungsachse (3b) auf einer parallel zu der Stützebene (SP) und durch die Längsachse (X) verlaufenden Ebene gegeben ist, wobei es möglich ist, dass der erste Punkt zwischen dem zweiten Punkt und dem dritten Punkt liegt,
wobei die Längsachse (X) gleichabständig von einem linken Rad und einem rechten Rad derselben Bewegungsachse der mobilen Vorrichtung (1) ist, wobei die Längsachse eine Achse der Längssymmetrie der mobilen Vorrichtung (1) ist, und/oder
wobei der Betriebskörper (5) bewegbar entlang der Translationsachse (Y) zwischen einer rechten Seitenposition und einer linken Seitenposition ist, wobei die linke und rechte Seitenposition die maximalen Endgrenzen definieren, innerhalb derer der Betriebskörper (5) entlang der Translationsachse (Y) bewegbar ist, wobei eine maximale Translation zwischen der Längsachse (X) und der rechten und/oder linken Seitenposition zwischen 10 cm und 80 cm liegt, und/oder
wobei:
- wenn sich der Betriebskörper (5) in der rechten Seitenposition befindet,
o ein erster Endabschnitt (5a) des Betriebskörpers (5) einen maximalen Abstand in Bezug auf die Längsachse (X) aufweist und
o ein zweiter Endabschnitt (5b) des Betriebskörpers (5), der dem ersten Endabschnitt (5a) gegenüberliegt, einen minimalen Abstand in Bezug auf die Längsachse (X) aufweist,
- wenn sich der Betriebskörper (5) in der linken Seitenposition befindet,
o der erste Endabschnitt (5a) des Betriebskörpers (5) einen minimalen Abstand in Bezug auf die Längsachse (X) aufweist und
o der zweite Endabschnitt (5b) des Betriebskörpers (5), der dem ersten Endabschnitt (5a) gegenüberliegt, einen maximalen Abstand in Bezug auf die Längsachse (X) aufweist,
wobei eine durch den ersten und zweiten Endabschnitt (5b) des Betriebskörpers (5) verlaufende Linie mit der Translationsachse (Y) zusammenfällt oder parallel zu dieser ist, und/oder
wobei der Betriebskörper (5) in einer zentralen Position zwischen der linken Seitenposition und der rechten Seitenposition positionierbar ist, wobei die zentrale Position als Referenzposition für den Betriebskörper (5) dient,
in der zentralen Position der erste und der zweite Endabschnitt (5b) des Betriebskörpers (5) gleichabständig in Bezug auf die Längsachse (X) der mobilen Vorrichtung (1) sind,
wobei in der zentralen Position der Betriebskörper (5) nicht oder weniger aus der Umfangsform (7) der mobilen Vorrichtung (1) in Bezug auf die linke oder rechte Seitenposition hervortritt.

5. Mobile Vorrichtung (1) nach einem der vorstehenden Ansprüche, wobei eine Hülle der Bewegungsmittel (3) eine Umfangsform (7) der mobilen Vorrichtung (1) definiert,
wobei eine Bewegung des Betriebskörpers (5) entlang der Translationsachse (Y) es dem Betriebskörper (5) ermöglicht, in einer variablen Höhe in Bezug auf die Umfangsform (7) hervorzutreten, wobei die Bewegungsmittel (3) Folgendes umfassen:
- mindestens zwei Räder, die an einem vorderen Abschnitt (10) der mobilen Vorrichtung (1) angeordnet sind, und
- mindestens zwei Räder an einem hinteren Abschnitt (11) der mobilen Vorrichtung (1),
wobei die Räder die Umfangsform (7) der mobilen Vorrichtung (1) definieren,
wobei:
- wenn sich der Betriebskörper (5) in der rechten Seitenposition befindet, der Betriebskörper (5) teilweise nach rechts in Bezug auf die Umfangsform (7) hervortritt und nicht nach links in Bezug auf die Umfangsform (7) hervortritt,
- wenn sich der Betriebskörper (5) in der linken Seitenposition befindet, der Betriebskörper (5) teilweise nach links in Bezug auf die Umfangsform (7) hervortritt und nicht nach rechts in Bezug auf die Umfangsform (7) hervortritt, und/oder wobei die bewegliche Vorrichtung (1) ein Rasenmäher ist und das Arbeitswerkzeug (4) ein rotierendes Messer ist, das durch Rotation um eine Rotationsachse (A) bewegbar ist,
wobei die Translationsachse (Y) zu der Rotationsachse (A) ist,
wobei die Rotationsachse (A) des rotierenden Messers bewegbar für eine Translation entlang der Translationsachse (Y) zu der gleichen Zeit wie der Betriebskörper (5) ist, und
wobei die Rotationsachse (A) des rotierenden Messers orthogonal zu der Stützebene ist, wenn sie in der rechten Seitenposition, in der linken Seitenposition und in der zentralen Position des Betriebskörpers (5) angeordnet ist.

6. Mobile Vorrichtung (1) nach einem der vorstehenden Ansprüche, wobei die eine oder mehreren Schienen (6) eine erste und eine zweite Schiene (6a, 6b) umfassen, die parallel zueinander sind und sich in der Länge entlang einer jeweiligen Richtung parallel zu der Translationsachse (Y) erstrecken,
wobei die erste Schiene (6a) an dem vorderen Abschnitt (10) der bewegbaren Vorrichtung (1) angeordnet ist, während die zweite Schiene (6b) an dem hinteren Abschnitt (11) der bewegbaren Vorrichtung (1) angeordnet ist,
wobei die Längsrichtung der ersten Schiene (6a) und der zweiten Schiene (6b) orthogonal zu der Längsachse (X) und parallel zu der Stützebene (SP) ist, wobei die Längsrichtung der ersten Schiene (6a) und der zweiten Schiene (6b) parallel zu der Querachse (W) ist, die durch die Breitenausdehnung der mobilen Vorrichtung (1) definiert ist,
wobei der Betriebskörper (5) eine erste und eine zweite Führung (8a, 8b) umfasst, die jeweils mit der ersten und der zweiten Schiene (6a, 6b) zusammenwirken, um die relative Bewegung zwischen der Schiene und dem Betriebskörper (5) zu ermöglichen,
wobei die erste und zweite Führung (8a, 8b) jeweils mindestens eine entsprechende Öse mit einer Durchgangsöffnung umfassen, wobei die erste Schiene (6a) in die Durchgangsöffnung der Öse der ersten Führung (8a) eingesetzt ist, während die zweite Schiene (6b) in die Durchgangsöffnung der Öse der zweiten Führung (8b) eingesetzt ist,
wobei die erste und die zweite Führung (8a, 8b) auf der jeweiligen ersten und zweiten Schiene (6a, 6b) verschiebbar sind, um die Beweglichkeit des Betriebskörpers (5) entlang der Translationsachse (Y) zu ermöglichen,
wobei die erste Führung (8a) an dem vorderen Abschnitt (10) der mobilen Vorrichtung (1) angeordnet ist, während die zweite Führung (8b) an dem hinteren Abschnitt (11) der mobilen Vorrichtung (1) angeordnet ist.

7. Mobile Vorrichtung (1) nach einem der vorstehenden Ansprüche, wobei der mindestens eine Aktuator operativ mit dem Betriebskörper (5) verbunden und dazu konfiguriert ist, den Betriebskörper (5) entlang der Translationsachse (Y) zu bewegen.

8. Mobile Vorrichtung (1) nach einem der vorstehenden Ansprüche, wobei die Steuereinheit (50) konfiguriert ist zum:
- Empfangen von dem Hindernisdetektor (9) mindestens eines Signals, das für die Anwesenheit eines Hindernisses (100) entlang eines Pfads der mobilen Vorrichtung (1) repräsentativ ist,
- wenn der Detektor ein Hindernis (100) erfasst, Anweisen des Aktuators, den Betriebskörper (5) entlang der Translationsachse (Y) in Richtung der zentralen Position zu bewegen.

9. Mobile Vorrichtung (1) nach Anspruch 4, wobei die Steuereinheit (50) konfiguriert ist zum:
- Bestimmen, ob sich das Hindernis (100) auf der linken (12) oder rechten Seite der mobilen Vorrichtung (1) befindet;
- Bestimmen, ob sich der Betriebskörper (5) in der linken Seitenposition oder in der rechten Seitenposition befindet.

10. Mobile Vorrichtung (1) nach Anspruch 4 oder 9, wobei:
- wenn festgestellt wird, dass sich das Hindernis (100) auf der linken Seite (12) der mobilen Vorrichtung (1) befindet und sich der Betriebskörper (5) in der linken Seitenposition befindet, die Steuereinheit (50) dazu konfiguriert ist, den Aktuator anzuweisen, den Betriebskörper (5) aus der linken Seitenposition in die zentrale Position oder in die rechte Seitenposition zu bewegen; und/oder
- wenn festgestellt wird, dass sich das Hindernis (100) auf der rechten Seite (13) der mobilen Vorrichtung (1) befindet und sich der Betriebskörper (5) in der rechten Seitenposition befindet, die Steuereinheit (50) dazu konfiguriert ist, den Aktuator anzuweisen, den Betriebskörper (5) aus der rechten Seitenposition in die zentrale Position oder in die linke Seitenposition zu bewegen; und/oder
- wenn festgestellt wird, dass sich das Hindernis (100) auf der linken Seite (12) der mobilen Vorrichtung (1) befindet und sich der Betriebskörper (5) in der zentralen Position befindet, die Steuereinheit (50) dazu konfiguriert ist, den Aktuator anzuweisen, den Betriebskörper (5) aus der zentralen Position in die rechte Seitenposition zu bewegen; und/oder
- wenn festgestellt wird, dass sich das Hindernis (100) auf der rechten Seite (13) der mobilen Vorrichtung (1) befindet und sich der Betriebskörper (5) in der zentralen Position befindet, die Steuereinheit (50) dazu konfiguriert ist, den Aktuator anzuweisen, den Betriebskörper (5) aus der zentralen Position in die linke Seitenposition zu bewegen; und/oder
- wenn festgestellt wird, dass sich das Hindernis (100) auf der linken Seite (12) der mobilen Vorrichtung (1) befindet und sich der Betriebskörper (5) in der rechten Seitenposition befindet, die Steuereinheit (50) dazu konfiguriert ist, den Betriebskörper (5) in der rechten Seitenposition zu halten;
- wenn festgestellt wird, dass sich das Hindernis (100) auf der rechten Seite (13) der mobilen Vorrichtung (1) befindet und sich der Betriebskörper (5) in der linken Seitenposition befindet, die Steuereinheit (50) dazu konfiguriert ist, den Betriebskörper (5) in der linken Seitenposition zu halten;
- wenn festgestellt wird, dass sich das Hindernis (100) auf der rechten Seite (13) und der linken Seite (12) der mobilen Vorrichtung (1) befindet, die Steuereinheit (50) dazu konfiguriert ist, den Aktuator anzuweisen, den Betriebskörper (5) in die zentrale Position zu bewegen, und/oder das Bewegungsmittel (3) so anzuweisen, dass ein zum Loslösen der mobilen Vorrichtung (1) von dem Hindernis (100) nützliches Manöver durch gleichzeitiges Anweisen des Stopps des Arbeitswerkzeugs (4) ausgeführt wird.

11. Mobile Vorrichtung (1) nach einem der vorstehenden Ansprüche, wobei der Hindernisdetektor (9) mindestens eines von Folgendem umfasst:
- einen Näherungssensor;
- einen Trägheitssensor;
- eine Videokamera;
- einen Flugzeitsensor,
- einen Aufpralldetektor, der dazu konfiguriert ist, ein Hindernis (100) als Reaktion auf einen Aufprall mit dem Hindernis (100) zu erfassen.

12. Mobile Vorrichtung (1) nach Anspruch 11, wobei der Aufpralldetektor eine Klappe umfasst, die bewegbar ist zwischen:
- einer ausgefahrenen Position, in der die Klappe seitlich hervortritt, um eine Erfassungserweiterung zu definieren, wobei die Klappe in Bezug auf eine Umfangsform (7) der mobilen Vorrichtung (1) hervortritt, und
- einer geschlossenen Position, in der die Klappe ihre seitliche Abmessung in Bezug auf die Erfassungserweiterung reduziert,
und wobei der Aufpralldetektor ein elastisches Element umfasst, das operativ mit der Klappe verbunden ist und dazu konfiguriert ist, eine elastische Kraft auf die Klappe in einer Richtung auszuüben, die zum Anordnen der Klappe in der ausgefahrenen Position angepasst ist.

13. Mobile Vorrichtung (1) nach einem der vorstehenden Ansprüche, wobei die mobile Vorrichtung (1) ein selbstfahrendes System umfasst, das ein peripheres Kabelsystem umfasst.

14. Mobile Vorrichtung (1) nach einem der vorstehenden Ansprüche, wobei die mobile Vorrichtung (1) ein selbstfahrendes System umfasst, das ein Führungssystem mittels eines GNSS-Sensors umfasst.

15. Mobile Vorrichtung (1) nach einem der vorstehenden Ansprüche, wobei die mobile Vorrichtung (1) ein selbstfahrendes System umfasst, das ein Sichtsystem umfasst, das mit einer oder mehreren Kameras bereitgestellt ist.

## Revendications

1. Dispositif mobile autopropulsé (1) pour l'entretien de terrains, comprenant un cadre de support (2) portant :
- des moyens de déplacement (3) configurés pour permettre ou déterminer un déplacement du dispositif mobile (1), lesdits moyens de déplacement (3) définissant un plan de support (SP) pour le dispositif mobile (1) ;
- au moins un outil de travail (4) configuré pour effectuer des opérations d'entretien ;
- un corps fonctionnel (5) portant et/ou logeant ledit outil de travail (4),
dans lequel ledit dispositif mobile (1) s'étend :
- en longueur entre une partie avant (10) et une partie arrière (11) pour définir un axe longitudinal (X) du dispositif mobile (1),
- en hauteur le long d'un axe vertical (Z) perpendiculaire audit axe longitudinal (X) et audit plan de support (SP),
- en largeur le long d'un axe transversal (W) entre un côté gauche (12), interposé comme liaison entre la partie avant (10) et la partie arrière (11) du dispositif mobile (1), et un côté droit (13), également interposé comme liaison entre la partie avant (10) et la partie arrière (11) du dispositif mobile (1), ledit côté droit (13) étant opposé audit et positionné à une certaine distance dudit côté gauche (12), ledit axe transversal (W) étant perpendiculaire audit axe longitudinal (X),
dans lequel ledit dispositif mobile (1) comprend au moins :
- un moteur de traction relié fonctionnellement aux moyens de déplacement (3) pour entraîner et déplacer le dispositif mobile (1),
- au moins un détecteur d'obstacle (9) configuré pour détecter un ou plusieurs obstacles pendant un déplacement du dispositif mobile (1),
- au moins un actionneur effectif entre ledit corps fonctionnel (5) et ledit cadre de support (2) et configuré pour permettre audit corps fonctionnel (5) d'être déplacé transversalement audit cadre de support (2),
- au moins une unité de commande (50) reliée fonctionnellement audit moteur de traction, audit détecteur d'obstacle (9) et audit actionneur,
**caractérisé en ce que** ledit dispositif mobile (1) comprend un ou plusieurs rails (6) limitant le corps fonctionnel (5) au cadre de support (2) et configurés pour permettre le déplacement du corps fonctionnel (5) le long d'au moins un axe de translation (Y),
ledit axe de translation (Y) étant parallèle audit ou coïncidant avec ledit axe transversal (W), ou ledit axe de translation (Y) définissant avec ledit axe transversal (W) un angle inférieur à 45°.

2. Dispositif mobile (1) selon la revendication précédente, dans lequel le dispositif mobile (1) est un dispositif mobile autopropulsé (1) pour l'entretien de pelouses ou de jardins ou de terres agricoles,
dans lequel ledit corps fonctionnel (5) définit une zone d'actionnement pour des opérations d'entretien au moyen du dispositif mobile (1),
dans lequel ledit moteur de traction est un moteur électrique, et
dans lequel ladite unité de commande est configurée pour générer au moins un signal de commande vers ledit actionneur lors de la réception par ledit détecteur d'obstacle (9) d'au moins un signal représentatif de la présence d'un obstacle (100) le long d'un trajet du dispositif mobile (1).

3. Dispositif mobile (2) selon la revendication 1 ou la revendication 2, dans lequel le corps fonctionnel (5) est mobile le long dudit axe de translation (Y) vers ledit côté gauche (12) et vers ledit côté droit (13) du dispositif mobile (1), et/ou
dans lequel ledit axe de translation (Y) est parallèle audit plan de support (SP), dans lequel, pendant un état de fonctionnement du dispositif mobile (1), le corps fonctionnel (5) est mobile parallèlement au sol,
ledit axe de translation (Y) étant :
- perpendiculaire audit axe longitudinal (X) du dispositif mobile (1), et
- perpendiculaire audit axe vertical (Z),
dans lequel le corps fonctionnel (5) est mobile :
- en hauteur le long dudit axe vertical (Z) entre une position distale et une position proche du sol, par rapport au plan de support (SP), et
- le long dudit axe de translation (Y),
ledit axe vertical (Z) et ledit axe de translation (Y) étant perpendiculaires l'un à l'autre.

4. Dispositif mobile (1) selon l'une quelconque des revendications précédentes, dans lequel un état de déplacement rectiligne du dispositif mobile (1) définit une direction d'avancement longitudinale, ladite direction d'avancement longitudinale coïncidant avec ledit axe longitudinal (X) du dispositif mobile (1), et/ou
dans lequel les moyens de déplacement (3) comprennent un axe de déplacement avant (3a) incluant une roue avant gauche (3a') et une roue avant droite (3a"), et un axe de déplacement arrière (3b) incluant une roue arrière gauche (3b') et une roue arrière droite (3b"),
ledit axe longitudinal (X) étant perpendiculaire audit axe de déplacement avant (3a) et/ou audit axe de déplacement arrière (3b) du dispositif mobile (1),
ledit axe de translation (Y) étant parallèle audit axe de déplacement avant (3a) et/ou audit axe de déplacement arrière (3b),
dans lequel, un premier point étant donné par l'intersection entre ledit axe longitudinal (X) et la projection dudit axe de translation (Y) sur un plan parallèle audit plan de support (SP) et passant par ledit axe longitudinal (X), un deuxième point étant donné par l'intersection entre ledit axe longitudinal (X) et la projection dudit axe de déplacement avant (3a) sur un plan parallèle audit plan de support (SP) et passant par ledit axe longitudinal (X) et un troisième point étant donné par l'intersection entre ledit axe longitudinal (X) et la projection dudit axe de déplacement arrière (3b) sur un plan parallèle audit plan de support (SP) et passant par ledit axe longitudinal (X), il est possible que ledit premier point soit interposé entre ledit deuxième point et ledit troisième point,
dans lequel ledit axe longitudinal (X) est équidistant d'une roue gauche et d'une roue droite du même axe de déplacement du dispositif mobile (1), ledit axe longitudinal étant un axe de symétrie longitudinale du dispositif mobile (1), et/ou
dans lequel le corps fonctionnel (5) est mobile le long de l'axe de translation (Y) entre une position latérale droite et une position latérale gauche, lesdites positions latérales gauche et droite définissant les limites d'extrémité maximales à l'intérieur desquelles ledit corps fonctionnel (5) est mobile le long de l'axe de translation (Y), dans lequel une translation maximale entre ledit axe longitudinal (X) et ladite position latérale droite et/ou gauche est comprise entre 10 cm et 80 cm, et/ou
dans lequel :
- lorsque le corps fonctionnel (5) est en position latérale droite,
o une première partie d'extrémité (5a) du corps fonctionnel (5) présente une distance maximale par rapport audit axe longitudinal (X), et
o une seconde partie d'extrémité (5b) du corps fonctionnel (5), opposée à ladite première partie d'extrémité (5a), présente une distance minimale par rapport à l'axe longitudinal (X),
- lorsque le corps fonctionnel (5) est en position latérale gauche,
o la première partie d'extrémité (5a) du corps fonctionnel (5) présente une distance minimale par rapport audit axe longitudinal (X), et
o la seconde partie d'extrémité (5b) du corps fonctionnel (5), opposée à ladite première partie d'extrémité (5a), présente une distance maximale par rapport à l'axe longitudinal (X),
dans lequel une ligne passant par lesdites première et seconde parties d'extrémité (5b) du corps fonctionnel (5) coïncide avec ou est parallèle à l'axe de translation (Y), et/ou
dans lequel le corps fonctionnel (5) peut être positionné dans une position centrale interposée entre ladite position latérale gauche et ladite position latérale droite, ladite position centrale faisant office de position de référence pour ledit corps fonctionnel (5),
dans ladite position centrale, la première et la seconde partie d'extrémité (5b) du corps fonctionnel (5) étant équidistantes par rapport à l'axe longitudinal (X) du dispositif mobile (1),
dans lequel, dans ladite position centrale, le corps fonctionnel (5) ne ressort pas ou ressort moins de la forme périphérique (7) du dispositif mobile (1) par rapport à la position latérale gauche ou droite.

5. Dispositif mobile (1) selon l'une quelconque des revendications précédentes, dans lequel une enveloppe des moyens de déplacement (3) définit une forme périphérique (7) du dispositif mobile (1),
dans lequel un déplacement du corps fonctionnel (5) le long de l'axe de translation (Y) permet au corps fonctionnel (5) de ressortir d'une hauteur variable par rapport à ladite forme périphérique (7),
dans lequel les moyens de déplacement (3) comprennent :
- au moins deux roues placées au niveau d'une partie avant (10) du dispositif mobile (1), et
- au moins deux roues au niveau d'une partie arrière (11) du dispositif mobile (1),
lesdites roues définissant la forme périphérique (7) du dispositif mobile (1),
dans lequel :
- lorsque le corps fonctionnel (5) est en position latérale droite, le corps fonctionnel (5) ressort partiellement vers la droite par rapport à ladite forme périphérique (7) et ne ressort pas vers la gauche par rapport à ladite forme périphérique (7),
- lorsque le corps fonctionnel (5) est en position latérale gauche, le corps fonctionnel (5) ressort partiellement vers la gauche par rapport à ladite forme périphérique (7) et ne ressort pas vers la droite par rapport à ladite forme périphérique (7), et/ou
dans lequel le dispositif mobile (1) est une tondeuse à gazon et l'outil de travail (4) est une lame rotative mobile par rotation autour d'un axe de rotation (A),
dans lequel ledit axe de translation (Y) est audit axe de rotation (A),
dans lequel ledit axe de rotation (A) de la lame rotative est mobile pour translation le long dudit axe de translation (Y) en même temps que le corps fonctionnel (5), et
dans lequel ledit axe de rotation (A) de la lame rotative est perpendiculaire au plan de support lorsqu'il est agencé en position latérale droite, en position latérale gauche et en position centrale du corps fonctionnel (5).

6. Dispositif mobile (1) selon l'une quelconque des revendications précédentes, dans lequel lesdits un ou plusieurs rails (6) comprennent un premier rail et un second rail (6a, 6b) parallèles l'un à l'autre et s'étendant en longueur le long d'une direction respective parallèle à l'axe de translation (Y),
dans lequel le premier rail (6a) est agencé au niveau de la partie avant (10) du dispositif mobile (1), en même temps que le second rail (6b) est agencé au niveau de la partie arrière (11) du dispositif mobile (1),
dans lequel ladite direction longitudinale du premier rail (6a) et du second rail (6b) est perpendiculaire à l'axe longitudinal (X) et parallèle au plan de support (SP), ladite direction longitudinale du premier rail (6a) et du second rail (6b) étant parallèle à l'axe transversal (W) défini par l'extension en largeur du dispositif mobile (1),
dans lequel le corps fonctionnel (5) comprend un premier et un second guide (8a, 8b) coopérant chacun avec le premier et le second rail (6a, 6b), respectivement, pour permettre le déplacement relatif entre le rail et le corps fonctionnel (5),
lesdits premier et second guides (8a, 8b) comprenant chacun au moins un œillet respectif présentant une ouverture traversante, le premier rail (6a) étant inséré dans l'ouverture traversante de l'œillet du premier guide (8a), en même temps que le second rail (6b) étant inséré dans l'ouverture traversante de l'œillet du second guide (8b),
les premier et second guides (8a, 8b) pouvant coulisser sur les premier et second rails (6a, 6b) respectifs pour permettre la mobilité du corps fonctionnel (5) le long de l'axe de translation (Y),
dans lequel le premier guide (8a) est situé au niveau de la partie avant (10) du dispositif mobile (1), en même temps que le second guide (8b) est situé au niveau de la partie arrière (11) du dispositif mobile (1).

7. Dispositif mobile (1) selon l'une quelconque des revendications précédentes, dans lequel ledit au moins un actionneur est relié fonctionnellement au corps fonctionnel (5) et est configuré pour déplacer le corps fonctionnel (5) le long de l'axe de translation (Y).

8. Dispositif mobile (1) selon l'une quelconque des revendications précédentes, dans lequel ladite unité de commande (50) est configurée pour :
- recevoir dudit détecteur d'obstacle (9) au moins un signal représentatif de la présence d'un obstacle (100) le long d'un trajet du dispositif mobile (1),
- si ledit détecteur détecte un obstacle (100), ordonner à l'actionneur de déplacer le corps fonctionnel (5) le long de l'axe de translation (Y) vers la position centrale.

9. Dispositif mobile (1) selon la revendication 4, dans lequel ladite unité de commande (50) est configurée pour :
- déterminer si ledit obstacle (100) est situé du côté gauche (12) ou du côté droit du dispositif mobile (1) ;
- déterminer si le corps fonctionnel (5) est en position latérale gauche ou en position latérale droite.

10. Dispositif mobile (1) selon la revendication 4 ou la revendication 9, dans lequel :
- s'il est établi que ledit obstacle (100) est du côté gauche (12) du dispositif mobile (1) et qu'il est établi que le corps fonctionnel (5) est en position latérale gauche, l'unité de commande (50) est configurée pour ordonner à l'actionneur de déplacer le corps fonctionnel (5) de la position latérale gauche à la position centrale ou à la position latérale droite ; et/ou
- s'il est établi que ledit obstacle (100) est du côté droit (13) du dispositif mobile (1) et qu'il est établi que le corps fonctionnel (5) est en position latérale droite, l'unité de commande (50) est configurée pour ordonner à l'actionneur de déplacer le corps fonctionnel (5) de la position latérale droite à la position centrale ou à la position latérale gauche ; et/ou
- s'il est établi que ledit obstacle (100) est du côté gauche (12) du dispositif mobile (1) et qu'il est établi que le corps fonctionnel (5) est en position centrale, l'unité de commande (50) est configurée pour ordonner à l'actionneur de déplacer le corps fonctionnel (5) de la position centrale à la position latérale droite ; et/ou
- s'il est établi que ledit obstacle (100) est du côté droit (13) du dispositif mobile (1) et qu'il est établi que le corps fonctionnel (5) est en position centrale, l'unité de commande (50) est configurée pour ordonner à l'actionneur de déplacer le corps fonctionnel (5) de la position centrale à la position latérale gauche ; et/ou
- s'il est établi que ledit obstacle (100) est du côté gauche (12) du dispositif mobile (1) et qu'il est établi que le corps fonctionnel (5) est en position latérale droite, l'unité de commande (50) est configurée pour maintenir le corps fonctionnel (5) en position latérale droite;
- s'il est établi que ledit obstacle (100) est du côté droit (13) du dispositif mobile (1) et qu'il est établi que le corps fonctionnel (5) est en position latérale gauche, l'unité de commande (50) est configurée pour maintenir le corps fonctionnel (5) en position latérale gauche ;
- s'il est établi que ledit obstacle (100) est du côté droit (13) et du côté gauche (12) du dispositif mobile (1), l'unité de commande (50) est configurée pour ordonner à l'actionneur de déplacer le corps fonctionnel (5) dans la position centrale et/ou pour commander lesdits moyens de déplacement (3) de sorte qu'une manœuvre utile pour dégager le dispositif mobile (1) dudit obstacle (100) soit effectuée en ordonnant simultanément l'arrêt de l'outil de travail (4).

11. Dispositif mobile (1) selon l'une quelconque des revendications précédentes, dans lequel le détecteur d'obstacle (9) comprend au moins l'un des éléments parmi :
- un capteur de proximité ;
- un capteur inertiel ;
- une caméra vidéo ;
- un capteur de temps de vol,
- un détecteur de collision configuré pour détecter un obstacle (100) en réponse à une collision avec ledit obstacle (100).

12. Dispositif mobile (1) selon la revendication 11, dans lequel ledit détecteur de collision comprend un volet mobile entre :
- une position déployée, dans laquelle ledit volet ressort latéralement pour définir une extension de détection, ledit volet ressortant par rapport à une forme périphérique (7) du dispositif mobile (1), et
- une position fermée dans laquelle ledit volet réduit sa dimension latérale par rapport à ladite extension de détection,
et dans lequel ledit détecteur de collision comprend un élément élastique relié fonctionnellement audit volet et configuré pour exercer une force élastique sur ledit volet dans une direction conçue pour agencer ledit volet dans la position déployée.

13. Dispositif mobile (1) selon l'une quelconque des revendications précédentes, dans lequel le dispositif mobile (1) comprend un système autopropulsé comprenant un système de fils périphériques.

14. Dispositif mobile (1) selon l'une quelconque des revendications précédentes, dans lequel le dispositif mobile (1) comprend un système autopropulsé comprenant un système de guidage au moyen d'un capteur GNSS.

15. Dispositif mobile (1) selon l'une quelconque des revendications précédentes, dans lequel le dispositif mobile (1) comprend un système autopropulsé comprenant un système de vision muni d'une ou plusieurs caméras.
